(19) Europäisches Patentamt
European Patent Office
Office européen des brevets

(11) **EP 1 470 042 B1**

(12) **FASCICULE DE BREVET EUROPEEN**

(45) Date de publication et mention
de la délivrance du brevet:
**04.10.2006 Bulletin 2006/40**

(21) Numéro de dépôt: **03715031.5**

(22) Date de dépôt: **21.01.2003**

(51) Int Cl.:
*B63H 1/36* *(2006.01)*    *B63H 16/18* *(2006.01)*

(86) Numéro de dépôt international:
**PCT/FR2003/000183**

(87) Numéro de publication internationale:
**WO 2003/062048 (31.07.2003 Gazette 2003/31)**

(54) **DISPOSITIF POUR DEPLACEMENT ONDULATOIRE A DEUX SENS DE MARCHE, UTILISABLE AUSSI EN GENERATEUR**

VORRICHTUNG ZUR WELLENVERDRÄNGUNG IN ZWEI FAHRTRICHTUNGEN, VERWENDBAR AUCH ALS ANTRIEB

DEVICE THAT IS USED TO CREATE A RIPPLING MOTION IN TWO DIRECTIONS OF MOVEMENT WHICH CAN ALSO BE USED AS A GENERATOR

(84) Etats contractants désignés:
**AT BE BG CH CY CZ DE DK EE ES FI FR GB GR HU IE IT LI LU MC NL PT SE SI SK TR**

(30) Priorité: **22.01.2002 FR 0200747**

(43) Date de publication de la demande:
**27.10.2004 Bulletin 2004/44**

(73) Titulaire: **Velsys**
**38930 Clelles (FR)**

(72) Inventeur: **Chatelain, Pierre**
**38930 Clelles (FR)**

(56) Documents cités:
**FR-A- 2 518 047**    **US-A- 3 880 107**
**US-A- 5 000 706**    **US-A- 5 584 732**

EP 1 470 042 B1

Printed by Jouve, 75001 PARIS (FR)

## EP 1 470 042 B1

**Description**

La présente invention concerne un dispositif, destiné à permettre le déplacement du véhicule qui l'utilise, en exploitant un principe adopté pour se déplacer, dans ou sur divers milieux, par de nombreuses espèces animales telles que des insectes, des poissons, des tortues, des oiseaux, des mammifères et notamment l'homme lorsqu'il patine sur le sol ou sur la glace, ou qu'il godille à bord d'une barque.

Ces animaux, et l'homme dans certains cas, se déplacent en utilisant un élément propulsif terminal que l'on peut schématiser comme étant une surface plane animée de deux mouvements périodiques synchronisés entre eux, assimilables à des mouvements élémentaires sinusoïdaux de même fréquence et déphasés entre eux : une translation approximativement rectiligne selon une direction perpendiculaire au déplacement de l'animal, et une rotation selon un axe parallèle à la surface plane et perpendiculaire à la fois au déplacement de l'animal et à la direction de translation. Lorsque l'animal se déplace en ligne droite, la trajectoire d'un point de l'élément propulsif terminal peut être assimilée à une sinusoïde axée sur la direction du déplacement, et le mouvement de l'élément propulsif terminal est comparable à une ondulation basée sur ladite sinusoïde. Dans la suite du texte, ce mode de déplacement sera dit déplacement ondulatoire.

Les exemples suivants illustrent le déplacement ondulatoire quand il est horizontal : translation horizontale et rotation d'axe vertical pour la nageoire caudale du poisson ; translation verticale et rotation d'axe horizontal pour la queue du dauphin ou d'autres mammifères marins ; idem pour les ailes de l'oiseau ou de l'insecte volant à l'horizontale ; translation oblique et rotation d'axe oblique et perpendiculaire à la translation pour les pattes de la tortue aquatique ou les courtes ailes du pingouin qui nage.

En bateau, l'homme aussi est capable de recréer le déplacement ondulatoire en imprimant à la spatule d'un aviron une translation latérale et une rotation selon un axe vertical : c'est le mouvement de godille. Lorsqu'il palme, en mono-palme ou avec deux palmes, l'homme reproduit le mouvement des mammifères marins. De même, sur la glace, sur la neige ou directement sur le sol, l'homme quand il patine (ou quand il effectue le pas du patineur en ski de fond) imprime à ses pieds un mouvement de translation latérale couplé à une rotation selon un axe vertical, mouvement soit effectué alternativement et de manière complémentaire par les deux pieds, soit réalisé symétriquement par chaque pied (patin à glace ou patin à roulettes en ligne): il s'agit toujours du déplacement ondulatoire, même si l'effort de propulsion est transmis à la surface d'un milieu solide (sol ou glace) et non pas à un fluide (l'air ou l'eau) ; dans tous les cas une force, perpendiculaire à la direction de déplacement de l'élément propulsif terminal, est utilisée pour créer une résultante vers l'avant : portance aérodynamique dans l'air, portance hydrodynamique dans l'eau, force latérale de frottement pour la roue ou les roulettes sur le sol, force latérale sur le patin à glace ou le ski qui créent leur propre « rail » dans la glace ou la neige.

Le déplacement ondulatoire, assez universel chez les animaux pour se déplacer dans un fluide comme l'eau ou l'air, est très performant : de nombreuses études, théoriques ou expérimentales, ont montré que son rendement de propulsion pouvait dépasser 80 %, ce qui est supérieur à ce que réalisent usuellement la rame, la pagaie et l'hélice, ces trois systèmes étant couramment utilisés par les véhicules autonomes en énergie qui se meuvent dans ou sur l'eau. Parmi les premières de ces études, celle de I. E. Garrick en 1936 (« Propulsion of a Flapping and Oscillating Airfoil », NACA Technical Report n° 567) a notamment montré que, si l'on assimilait les mouvements de translation et de rotation à deux mouvements sinusoïdaux de même fréquence, un paramètre important pour optimiser le rendement de propulsion était l'angle $\varphi$ de déphasage entre les deux mouvements sinusoïdaux : selon la valeur de l'angle $\varphi$, le rendement de propulsion est plus ou moins élevé, et le système peut également travailler en générateur d'énergie ou en frein.

En plus de son rendement élevé, le déplacement ondulatoire supprime certains inconvénients rencontrés par les moyens habituels de déplacement utilisés par l'homme : pas de bruit des rames et des pagaies rentrant dans l'eau, pas d'enroulement d'algues ou d'autres corps autour des hélices en rotation, pas de cavitation des hélices tournant trop vite dans l'eau.

Un certain nombre de brevets ont été déposés, dont l'objet commun était de mécaniser le déplacement ondulatoire. Le document US 5 000 706 décrit un dispositif muni d'un repère orthonormé, destiné à animer un élément propulsif terminal, qui est un aileron hydrodynamique, d'un mouvement alternatif à deux composantes de translation et de rotation à des fins de déplacement dans divers milieux. Les moteurs usuels fournissant leur énergie sur un arbre tournant (moteurs électriques, thermiques, et même l'homme pour lequel une façon efficace d'utiliser l'énergie mécanique consiste à entraîner un pédalier avec les jambes). L' invention a pour but de transformer cette rotation en un double mouvement alternatif. Cette transformation se doit de ne pas générer trop de pertes, faute de quoi le rendement global risque de retomber au niveau d'un système mécanique de propulsion plus classique. Ce but est atteint à l'aide d'un dispositif selon la revendication 1. Les mouvements de translation rectiligne de pièces soumises à un effort perpendiculaire à la direction de translation engendrent des frottements importants, à moins de prévoir des systèmes de guidage linéaires, à base de roulements à billes ou à rouleaux, en général coûteux et fragiles. Une solution consiste, pour la translation nécessaire au mouvement ondulatoire, à la concrétiser par une translation curviligne que l'on pourra assimiler à une translation quasiment rectiligne, si la courbe, chemin de la translation, est un arc de cercle suffisamment ouvert.

On peut donc remplacer une translation rectiligne par une translation circulaire, donc en utilisant des pièces en rotation, mais à condition d'assurer à l'élément propulsif terminal son mouvement combiné de translation et de rotation, ce qui oblige, au niveau de l'élément propulsif terminal, d'une part à compenser la rotation induite par la translation curviligne et d'autre part à lui appliquer la loi périodique d'orientation qui est en déphasage avec sa loi périodique de translation.

Un principe basique consiste, à partir du mouvement de rotation d'un arbre, à animer un levier d'un mouvement de rotation alternative, au moyen d'une ou deux manivelles sur l'arbre et d'une ou deux bielles reliées au levier. Ce levier est susceptible de commander la translation curviligne de l'élément propulsif terminal ou son orientation.

S'agissant de la transformation d'un mouvement circulaire, a priori régulier, en un mouvement alternatif, il est important que le mouvement alternatif soit symétrique afin de ne pas créer un déséquilibre néfaste à la stabilité de direction du déplacement du véhicule utilisateur. Or la transformation d'un mouvement circulaire régulier en un mouvement alternatif symétrique pose certains problèmes que l'on va décrire dans ce qui suit.

En termes formalisés, on considère ici l'espace physique muni d'un repère orthonormé direct Oxyz ayant pour origine un point O, l'axe Oz étant orienté vers le haut, avec une première pièce, un arbre moteur à une manivelle aligné sur l'axe Oy qui constitue son axe de rotation, la manivelle, représentée par le point M en rotation autour de l'arbre, étant de rayon p et située à la coordonnée yM, une seconde pièce dite levier possédant un degré de liberté consistant en une rotation de demi-amplitude $\alpha$max autour du point B du levier selon un axe parallèle à Oz, B ayant comme coordonnées (xB, yB, 0) dans Oxyz, et une troisième pièce, une bielle de longueur L reliant le point M, qui représente la manivelle, au levier en un point C, dit point d'accroche de la bielle sur le levier, C se déplaçant dans le plan Oxy. M a comme coordonnées (xM, yM, zM) dans Oxyz : yM est une constante, et $xM^2 + zM^2 = \rho^2$. Le levier est muni d'un repère orthonormé direct $Bx_By_Bz_B$ défini comme suit : $Bx_B$ est orienté comme Ox quand le levier est en position neutre (c'est-à-dire dans la position angulaire médiane entre ses deux positions angulaires extrêmes), $Bx_B$ est orienté comme Oz. C a comme coordonnées ($x_BC$, $y_BC$, 0) dans $Bx_By_Bz_B$. Un déplacement du point M d'une abscisse positive vers une abscisse négative, entraîne le levier respectivement dans une rotation positive, c'est-à-dire de Ox vers Oy, ou bien dans une rotation négative, selon que l'angle CBM, en projection sur Oxy, est respectivement positif ou négatif. On note $\alpha$max la demi-amplitude totale de la rotation du levier, $\alpha$max étant pris par convention respectivement positif ou négatif selon que l'angle CBM en projection sur Oxy est respectivement positif ou négatif.

On considère maintenant un levier donné et son entraînement par l'arbre. On étudie deux cas : celui où le levier est entraîné par une seule bielle, et celui où le levier est entraîné par deux bielles, chaque bielle reliant une manivelle différente à un point d'accroche différent sur le levier.

Utilisation d'une seule bielle sur le levier.

Dans la configuration habituelle, le segment CB formé par le point d'accroche C de la bielle sur le levier et le point B de rotation du levier, lorsque ce dernier est en position neutre, est parallèle à l'axe Ox de l'arbre ; ceci s'exprime par xC = 0. On va voir que cette configuration a le désavantage de déséquilibrer le mouvement alternatif du levier par rapport au cycle de rotation de l'arbre : le secteur angulaire parcouru par l'arbre pour une demi-amplitude de rotation du levier n'est pas le même que pour l'autre demi-amplitude de rotation du levier.

On a deux équations qui caractérisent la constance de longueur de la bielle aux deux extrémités de la rotation du levier, positions qui correspondent aux deux positions extrêmes de M dans le plan Oxy : xM vaut - $\rho$ ou + $\rho$, zM est nul :

$$\text{(1std)} \quad L = [(xB - y_BC * \sin(\alpha max) + \rho)^2 + (y_BC * \cos(\alpha max) - (yM - yB))^2]^{1/2}$$

$$\text{(2std)} \quad L = [(xB - y_BC * \sin(-\alpha max) - \rho)^2 + (y_BC * \cos(-\alpha max) - (yM - yB))^2]^{1/2}$$

Ce système est résolu en remplaçant, dans (2std), L par sa valeur dans (1std), en élevant au carré les deux membres, et en isolant $y_BC$ :

$$\text{(2std')} \, y_BC = \rho / \sin(\alpha max)$$

La valeur de L peut alors être calculée en reportant la valeur de $y_BC$ dans (1std) soit, après simplification :

$$\text{(1std')} \, L = [xB^2 + (\rho / tg(\alpha max) - (yM - yB))^2]^{1/2}$$

A titre d'exemple non limitatif de valeurs numériques pour les paramètres, les valeurs $\rho = 0{,}170$ m, yM = 0,210 m, xB = 1,350 m, yB = 0 et $\alpha$max = 30 degrés, donnent les résultats suivants : L = 1,353 m, $y_BC$ = 0,340 m.

La valeur de $y_BC$ étant maintenant connue, calculons la longueur $L_n$ que la bielle devrait avoir pour que, lorsque la manivelle est en position neutre (xM = 0), le levier soit en position neutre (la rotation du levier est égale à 0) :

$$(3std)\ L_n = [xB^2 + (\rho\ /\ \sin(\alpha max) - (yM - yB))^2 + \rho^2]^{1/2}$$

Les longueurs L et $L_n$ sont manifestement différentes de par leurs expressions ; les mêmes valeurs numériques pour les paramètres donnent $L_n$ = 1,367 m, soit 14 mm de plus que L ; ceci correspond, ramené à la circonférence 2 * $\pi$ * $\rho$ de la manivelle, à un retard angulaire égal à : 2 * ($L_n$ - L) / (2 * $\pi$ * $\rho$) * 360, c'est-à-dire 9,44 degrés. Dans un cycle complet de 360 degrés de l'arbre, une demi-rotation du levier d'un côté de sa position correspond donc à 189,44 degrés sur l'arbre alors que l'autre demi-rotation correspond à 170,56 degrés. En terme de vitesse et en supposant une rotation à vitesse constante de l'arbre, la vitesse moyenne du levier dans la première demi-rotation sera inférieure de 100 * (189,44 -170,56) /189,44, soit 10 % de moins que pour la seconde demi-rotation du levier. Dans le cas où le déplacement est aquatique, les forces hydrodynamiques étant proportionnelles au carré de la vitesse, on peut donc s'attendre à une dissymétrie de fonctionnement encore plus importante pour la configuration habituelle du système arbre - bielle - levier.

Utilisation de deux bielles.

Cette méthode consiste à utiliser deux manivelles M et M' en opposition de phase sur le même arbre et de part et d'autre du point O sur l'axe de l'arbre, ces deux manivelles commandant deux leviers couplés en opposition de rotation ($\alpha$1 = - $\alpha$2), ou de manière équivalente un levier à deux points d'accroche C et C', dit levier double, au moyen de deux bielles de longueur L et L', les angles CBM et C'BM' étant de signe opposé ; c'est dans cette condition, associée à la position des manivelles sur l'arbre, que réside l'avantage de l'utilisation de deux bielles, car il est alors possible d'utiliser des bielles travaillant en traction uniquement et non plus aussi en compression comme dans la méthode à une seule bielle, ce qui permet de réduire notablement les caractéristiques mécaniques des bielles qui peuvent consister en de simples fils ou câbles. On considère, à titre d'exemple, deux manivelles M et M' déphasées de 180 degrés, de même rayon $\rho$, de positions opposées yM' = - yM sur l'axe de l'arbre et, par raison de symétrie pour les points d'accroche sur le levier double, $y_BC$' = - $y_BC$, avec les repères définis comme précédemment.

On remarque que le dimensionnement habituel n'est pas correct car, comme on l'a vu plus haut, la longueur L ou L' calculée par cette méthode n'est pas suffisante pour permettre à la manivelle M ou M' d'être en position neutre (xM ou xM' = 0) quand le levier est en position neutre : dans ce cas la longueur de la bielle doit être égale à $L_n$. Or, puisque les manivelles sont en opposition de phase, il faut que lorsque la manivelle M est en position neutre haute (zM = $\rho$), la manivelle M' soit en position basse (zM' = - $\rho$), le levier étant par raison de symétrie en position neutre. Ce qui oblige à allonger chaque bielle, de la longueur L à la longueur $L_n$ fournie par l'équation (3std) : si les bielles sont allongées, on voit que l'amplitude $\alpha$max de rotation du levier ne sera pas atteinte quand la manivelle est sur l'avant (xM ou xM' = - $\rho$), et qu'elle sera au contraire dépassée quand la manivelle est sur l'arrière (xM ou xM' = + $\rho$). Ce défaut conduit donc d'une part à un jeu très important dans les bielles, ce jeu étant pour chaque bielle égal à $L_n$ - L, et d'autre part à redimensionner le système pour que l'amplitude $\alpha$max soit tout de même atteinte, ce qui augmente encore le jeu en proportion.

Contrôle du déphasage $\varphi$.

On l'a vu plus haut, les études antérieures ont montré que l'efficacité du déplacement ondulatoire est liée au déphasage $\varphi$ entre les lois périodiques de translation et de rotation de l'élément propulsif terminal. Il est donc a priori essentiel de maîtriser ce déphasage, voire de pouvoir le régler de manière différente en fonctions de conditions d'utilisation différentes. Pour cela, il est utile de disposer de réglages indépendants sur les lois de translation et de rotation. L'utilisation de matériaux élastiques, comme cela est souvent le cas dans la technologie habituelle, qui adaptent la rotation de l'élément propulsif terminal à sa translation sous l'effet des forces générées par le milieu de déplacement, n'est pas souhaitable car le réglage de l'élasticité, qui n'est d'ailleurs pas toujours possible, n'est pas satisfaisant: d'une part le déphasage $\varphi$ n'est pas un paramètre directement accessible au moyen du réglage de l'élasticité, et d'autre part, la non réversibilité d'un tel système élastique ne permet pas l'inversion du sens de déplacement par simple inversion du sens de fonctionnement.

En conclusion, l'examen de l'état actuel de la technique concernant la génération du déplacement ondulatoire fait apparaître les problèmes suivants : coûts élevés par utilisation de systèmes de guidage linéaires, dissymétries du mouvement alternatif généré par la transformation rotation continue - rotation alternative, jeux importants dans les articulations de la même transformation induisant un fonctionnement insatisfaisant, non réversibilité des dispositifs faisant appel à des matériaux élastiques rendant malaisée l'inversion de sens du déplacement

Exposé de l'invention

On utilise dans ce qui suit les mêmes repères que précédemment

Le dispositif selon la présente invention est nouveau car il procure une manière simple de transformer un mouvement rotatif moteur en un mouvement alternatif à deux degrés de liberté de l'élément propulsif terminal proche de celui mis en oeuvre dans le déplacement ondulatoire, en n'utilisant que des éléments en rotation de façon à réduire les pertes par frottement, et cela avec les avantages suivants : réduction des dissymétries cinématiques inhérentes à la transformation d'un mouvement rotatif en un mouvement alternatif ; réduction importante voire annulation des jeux dans ladite transformation ; possibilité d'inversion du sens de marche du véhicule par simple inversion du sens de rotation du mouvement rotatif moteur ; possibilité de fonctionnement en générateur d'énergie ou en frein par réglage du déphasage φ entre les lois périodiques de translation et d'orientation. L'élément propulsif terminal auquel le mouvement alternatif à deux composantes est appliqué peut prendre diverses formes comme, en reprenant les exemples décrits plus haut dans le domaine technique de l'invention et sans que cela soit limitatif, un aileron aérodynamique ou hydrodynamique, ou une ou plusieurs roues d'axes de rotation parallèles, ou un patin à glace ou à neige, ou une combinaison de ces exemples.

Le dispositif selon la présente invention utilise également le système basique manivelle en rotation - bielle - levier oscillant mais dans une cinématique particulière qui va être développée. De plus, dans le cas de la présente invention, il y a deux groupes de un ou deux leviers chacun, à animer par le même arbre d'axe de rotation Ox, un groupe pour le mouvement de translation, l'autre groupe pour le mouvement de rotation : cette disposition permet de synchroniser les deux mouvements alternatifs de translation et d'orientation, et de contrôler leur déphasage par le décalage angulaire sur l'arbre entre les manivelles concernées. Lorsqu'il y a deux leviers dans un groupe, chacun des leviers est commandé par une bielle reliée à une manivelle qui est en opposition de phase avec la manivelle reliée à la bielle commandant l'autre levier. Les axes de rotation des leviers sont parallèles à Oz, et les points d'accroche des bielles sur les leviers sont dans le plan Oxy. Ces leviers sont couplés en rotation, dans le dispositif selon l'invention, à deux autres parties oscillantes : le groupe des leviers de translation commande une pièce allongée dans le plan Oxy, dite bras, dont l'axe de rotation, situé à une de ses deux extrémités, est parallèle à Oz ; le groupe des leviers d'orientation commande une pièce dite base d'orientation dont l'axe de rotation est le même que celui du bras ; une autre pièce, dite support d'élément propulsif terminal est articulée à l'autre extrémité du bras en rotation selon un axe parallèle à Oz, le support d'élément propulsif terminal étant couplé en rotation avec la base d'orientation. Le bras et la base d'orientation ayant leur axe de rotation commun parallèle avec ceux des leviers, les moyens de couplage en rotation sont ici classiques, comme une bielle formant parallélogramme articulé autour des axes de rotation d'un levier et du bras ou de la base d'orientation, comme un câble reliant deux réas ou secteurs angulaires, liés rigidement le premier avec un levier et le second avec le bras ou la base d'orientation, et de même axe de rotation respectivement que le levier et le bras ou la base d'orientation, ou encore comme dans le cas limite où un levier est fixé rigidement sur le bras ou la base d'orientation et donc d'axe de rotation commun avec la pièce sur laquelle il est fixé. Dans le cas de l'utilisation d'une bielle, ses points d'accroche peuvent être réglables, sur le levier ou la pièce couplée, de façon à détruire à dessein la symétrie du mouvement, ou de modifier le rapport angulaire entre le levier et la pièce couplée : détruire la symétrie du mouvement permet de modifier la direction du déplacement ondulatoire, même si cela peut être aussi fait en modulant la vitesse de rotation de l'arbre en fonction de sa position angulaire, pu par tout autre moyen tel qu'un gouvernail dans le cas d'un déplacement dans l'eau ; modifier le rapport angulaire, par exemple entre le groupe des leviers d'orientation et la base d'orientation permet de jouer sur la puissance consommée par le dispositif.

De manière générale, le couplage en rotation entre un levier et la pièce qu'il commande, bras ou base, peut utiliser des lois de couplage très variables, pourvu que la loi de couplage soit symétrique par rapport au point neutre en rotation du levier et que, dans le cas de deux leviers commandant la même pièce, les lois soient symétriques ; par exemple, la loi de couplage peut être à l'identique (même angle de rotation pour le levier et la pièce commandée), à l'opposé (angles de rotation opposés pour le levier et la pièce commandée), où avec un facteur d'amplification k (l'angle de rotation de la pièce commandée est k fois celui du levier).

Par ailleurs, les deux groupes de leviers, de translation et d'orientation, peuvent commander non pas un seul bras et une seule base d'orientation, mais plusieurs de ces pièces : si l'on appelle groupe de propulsion un ensemble formé d'un bras, d'une base de rotation de même axe de rotation que ce bras, un support d'élément propulsif terminal articulé sur ce bras selon un axe parallèle à l'axe de rotation du bras, et les moyens de couplage entre cette base d'orientation et cet élément propulsif terminal, les deux groupes de leviers peuvent commander plusieurs groupes propulsifs ; par exemple, il peut y avoir deux groupes propulsifs commandés par les leviers de façon symétrique par rapport à un plan perpendiculaire à Oxy.

Le couplage en rotation entre la base d'orientation et le support d'élément propulsif terminal présentant la même caractéristique de parallélisme des axes de rotation, les exemples précédents de couplage, parallélogramme articulé ou réas s'appliquent ici. Dans le cas de l'utilisation de réas, il y a avantage cependant à prévoir le même rayon pour les deux réas, afin de conserver, à l'instar de la méthode du parallélogramme articulé, l'indépendance de l'orientation du support d'élément propulsif terminal et de la position angulaire du bras : cela permet de maintenir l'indépendance de commande entre les deux mouvements alternatifs, de translation via le bras, et d'orientation via la base d'orientation.

La cinématique selon l'invention du système unitaire manivelle - bielle - levier est présentée maintenant.

Utilisation d'une seule bielle sur le levier.

Dans cette configuration selon la présente invention, on impose sur l'arbre en rotation l'égalité angulaire des cycles partiels correspondant aux deux demi-rotations du levier par rapport à sa position neutre ; pour cela, on conserve les deux conditions vues plus haut qui caractérisent la constance de longueur de la bielle aux deux extrémités de la rotation du levier, et on rajoute une équation caractérisant la conservation de longueur pour la bielle lorsque la manivelle est en position neutre ($xM = 0$) et que le levier est en position neutre :

$$(1inv) \quad Linv = [(xB + x_BCinv * \cos(\alpha max) - y_BCinv * \sin(\alpha max) + \rho)^2$$
$$+ ( x_BCinv * \sin(\alpha max) + y_BCinv * \cos(\alpha max) - (yM - yB))^2 ]^{1/2}$$

$$(2inv) \quad Linv = [(xB + x_BCinv * \cos(-\alpha max) - y_BCinv * \sin(-\alpha max) - \rho)^2$$
$$+ ( x_BCinv * \sin(-\alpha max) + y_BCinv * \cos(-\alpha max) - (yM - yB))^2 ]^{1/2}$$

$$(3inv) \quad Linv = [(xB + x_BCinv)^2 + (y_BCinv - (yM - yB))^2 + \rho^2 ]^{1/2}$$

Ces équations en $Linv$, $x_BCinv$ et $y_BCinv$ peuvent être résolues en remplaçant dans (1inv) et (2inv) la valeur de $Linv$ fournie par (3inv), puis en élevant (1inv) et (2inv) au carré et en regroupant les termes de façon à obtenir deux équations linéaires à deux inconnues $x_BCinv$ et $y_BCinv$ :

$$(1inv') \quad a1 * x_BCinv + b1 * y_BCinv = c1$$

$$(2inv') \quad a2 * x_BCinv + b2 * y_BCinv = c2$$

avec :

$$a1 = \cos(\alpha max) * ( \rho - xB) - \sin(\alpha max) * (yM - yB) + xB$$

$$b1 = \sin(\alpha max) * ( \rho - xB) + (yM - yB) * (\cos(\alpha max) - 1)$$

$$c1 = - xB * \rho$$

$$a2 = -\cos(\alpha max) * ( \rho + xB) + \sin(\alpha max) * (yM - yB) + xB$$

$$b2 = \sin(\alpha max) * ( \rho + xB) + (yM - yB) * (\cos(\alpha max) - 1)$$

$$c2 = xB * \rho$$

Ce système est résolu de manière classique; en posant d = a1 * b2 - b1 * a2, on obtient :

$$(1inv") \quad x_BCinv = (c1 * b2 - b1 * c2) / d$$

$$(2inv") \quad y_BCinv = (a1 * c2 - c1 * a2) / d$$

Il reste alors à reporter dans l'équation (3inv) les valeurs trouvées pour $x_BCinv$ et $y_BCinv$, pour obtenir directement la valeur de Linv. Avec les mêmes valeurs numériques pour les paramètres que précédemment, on obtient : $x_BCinv$ = -0,105 m, $y_BCinv$ = 0,333 m et Linv = 1,263 m.

On remarque donc que, par rapport à la configuration habituelle, le point d'accroche de la bielle selon la présente invention est déplacé d'une quantité non négligeable sur son abscisse, égale à environ 30 % de son ordonnée : l'équilibrage du cycle de rotation obtenu par le dispositif selon la présente invention et qui en constitue le premier avantage mentionné plus haut, entraîne une modification sensible par rapport à la géométrie habituelle du système.

Utilisation de deux bielles sur le levier.

Dans cette configuration, le dimensionnement selon la présente invention de Linv, $x_BCinv$ et $y_BCinv$ vu ci-dessus dans le cas d'une seule bielle sur le levier, est correct lorsqu'une manivelle est en position neutre, car l'équation (3inv) exprime précisément cette condition. Pour apprécier les jeux de fonctionnement, il reste à évaluer la longueur théorique de la seconde bielle lorsque la première manivelle effectue une demi-rotation de son point arrière à son point avant On pose $\gamma$, angle de rotation de la manivelle M, compris entre - et + 90 degrés et tel que $xM = \rho * \sin(\gamma)$ et $yM = \rho * \cos(\gamma)$. Le calcul s'effectue alors en définissant une fonction $fct\alpha y$, telle que $\alpha = fct\alpha\gamma(\gamma)$, permettant pour une position donnée de la manivelle M, de déterminer l'angle correspondant $\alpha$ de rotation du levier et, sachant d'une part que le second point d'accroche C' a subi la même rotation et d'autre part que la seconde manivelle M' est à une position opposée de M ($xM' = -xM$, $zM' = -zM$), de déterminer la distance M'C', ce qui par différence avec Linv donne le jeu $J(\gamma)$ = Linv - M'C'. On a :

$$fct\alpha\gamma(\alpha) = \text{solution de } (Linv = [(xB + x_BCinv * \cos(\alpha) - y_BCinv * \sin(\alpha) + \rho * \sin(\gamma))^2$$
$$+ (x_BCinv * \sin(\alpha) + y_BCinv * \cos(\alpha) - (yM - yB))^2$$
$$+ (\rho * \cos(\gamma))^2 ]^{1/2}$$

$$J(\gamma) = Linv - [xB + x_BCinv * \cos(\alpha) + y_BCinv * \sin(\alpha) - \rho * \sin(\gamma))^2$$
$$+ (x_BCinv * \sin(\alpha) - y_BCinv * \cos(\alpha) + (yM - yB))^2$$
$$+ (-\rho * \cos(\gamma))^2 ]^{1/2}$$

La même application numérique que précédemment montre que $J(\gamma)$ varie entre 0 et 1 mm, pour $\gamma$ variant entre - et + 90 degrés. Ceci appelle les deux constatations suivantes, qui constituent le deuxième avantage de la présente invention, mentionné plus haut : d'une part la variation de longueur théorique sur l'ensemble des deux bielles est, dans le cadre de la présente invention, 28 fois plus réduite que dans une configuration habituelle ; d'autre part, puisque $J(\gamma)$ est toujours positif et comme on peut considérer que la bielle sous tension (bielle tirante) est à sa longueur nominale Linv (= 1,263 m), la seconde bielle a sa longueur théorique réduite de 1 mm sur 1263 mm ce qui est très faible et que, s'agissant d'une réduction de longueur, une bielle souple (fil ou câble) reprendra cette réduction en se courbant légèrement : il n'y a donc pas obligation, dans le dimensionnement mis en oeuvre par la présente invention, de créer du jeu pour les bielles.

Les troisième et quatrième avantages de la présente invention, mentionnés au début de l'exposé de l'invention, découlent de la cinématique réversible et des possibilités de réglage de l'angle de déphasage $\varphi$ du dispositif selon l'invention, dispositif qui est décrit dans ce qui suit.

Le dispositif selon l'invention, muni d'un repère orthonormé direct Oxyz, destiné soit, à partir de son entraînement en rotation du fait de son ou de ses utilisateurs ou au moyen d'un système moteur à animer un élément propulsif terminal, qui peut être un aileron aérodynamique ou hydrodynamique ou une roue ou un patin à glace ou à neige ou une combinaison quelconque desdits éléments, d'un mouvement alternatif à deux composantes de translation et de rotation à des fins de déplacement dans divers milieux, soit, réciproquement, à partir du mouvement alternatif à deux composantes de translation et de rotation d'un élément propulsif terminal de même type à entraîner en rotation un générateur d'énergie, comporte selon une première caractéristique un arbre à manivelles porteur de deux manivelles dont la première, de rayon $\rho$T, est dite de translation et dont la seconde, de rayon $\rho$O, est dite d'orientation, une pièce allongée dans le plan Oxy dite bras articulée en rotation dans le repère Oxyz, une pièce dite support d'élément propulsif terminal articulée en rotation sur le bras et possédant un ou des moyens de liaison avec un élément propulsif terminal, une pièce dite levier de translation articulée en rotation dans le repère Oxyz, une pièce dite levier d'orientation articulée en rotation dans le repère Oxyz, une pièce dite base d'orientation articulée en rotation dans le repère Oxyz, une bielle dite de translation, une bielle dite d'orientation, un ou des moyens de couplage en rotation entre le levier de translation et le bras, un ou des moyens de couplage en rotation entre le levier d'orientation et la base d'orientation, un ou des moyens de couplage en rotation entre la base d'orientation et le support d'élément propulsif terminal, ces pièces étant disposées et dimensionnées de la manière suivante : l'axe de rotation de l'arbre à manivelles est disposé sur l'axe Oy, les deux manivelles de translation et d'orientation étant situées par rapport au plan Oxz aux coordonnées respectives yMT et yMO et déphasées entre elles d'un angle $\varphi$ ; le bras est articulé en rotation selon un axe parallèle à Oz, cet axe de rotation coupant le plan Oxy en un point B de coordonnées (xB, yB, 0) dans le repère Oxyz, le bras étant muni d'un repère orthonormé direct $Bx_By_Bz_B$, $Bz_B$ étant orienté comme Oz ; le support d'élément propulsif terminal étant articulé, sur le bras, en rotation selon un axe parallèle à l'axe $Bz_B$ et coupant $Bx_B$ en un point S de coordonnées ($x_BS$, 0, 0) dans le repère $Bx_By_Bz_B$ ; la base d'orientation est articulée en rotation selon l'axe $Bz_B$ ; le levier de translation est articulé en rotation selon un axe parallèle à Oz, cet axe de rotation coupant le plan Oxy en un point BT de coordonnées (xBT, yBT, 0) dans le repère Oxyz, ce levier de translation étant muni d'un repère orthonormé direct $BTx_{BT}y_{BT}z_{BT}$, $BTz_{BT}$ étant orienté comme Oz, $BTx_{BT}$ étant orienté comme Ox lorsque le levier de translation est en position de rotation neutre, sa demi-amplitude de rotation, mesurée à partir de l'axe $\hat{O}x$, étant notée $\alpha$maxBT, positive par convention lorsqu'un déplacement de la manivelle de translation vers les x positifs entraîne une rotation négative du levier de translation, et négative sinon ; le levier d'orientation est articulé en rotation selon un axe parallèle à Oz, cet axe de rotation coupant le plan Oxy en un point BO de coordonnées (xBO, yBO, 0) dans le repère Oxyz, ce levier d'orientation étant muni d'un repère orthonormé direct $BOx_{BO}y_{BO}z_{BO}$, $BOz_{BO}$ étant orienté comme Oz, $BOx_{BO}$ étant orienté comme Ox lorsque le levier d'orientation est en position de rotation neutre, sa demi-amplitude de rotation, mesurée à partir de l'axe Ox, étant notée $\alpha$maxBO, positive par convention lorsqu'un déplacement de la manivelle d'orientation vers les x positifs entraîne une rotation négative du levier d'orientation, et négative sinon ; la bielle de translation, de longueur LBT, relie la manivelle de translation au levier de translation en un point CT de coordonnées ($x_{BT}CT$, $y_{BT}CT$) dans le repère $BTx_{BT}y_{BT}$, la longueur LBT et les coordonnées ($x_{BT}CT$, $y_{BT}CT$) étant solutions du système formé par les trois équations suivantes :

$$\text{(Eq. A1)} \quad LBT = [(xL + x_{BT}CT * \cos(\alpha max) - y_{BT}CT * \sin(\alpha max) + \rho)^2 + (x_{BT}CT * \sin(\alpha max) + y_{BT}CT * \cos(\alpha max) - (yM - yL))^2]^{1/2}$$

$$\text{(Eq. B1)} \quad LBT = [(xL + x_{BT}CT * \cos(-\alpha max) - y_{BT}CT * \sin(-\alpha max) - \rho)^2 + (x_{BT}CT * \sin(-\alpha max) + y_{BT}CT * \cos(-\alpha max) - (yM - yL))^2]^{1/2}$$

$$\text{(Eq. C1)} \quad LBT = [(xL + x_{BT}CT)^2 + (y_{BT}CT - (yM - yL))^2 + \rho^2]^{1/2}$$

avec : $\rho = \rho$T, yM = yMT, xL = xBT, yL = yBT, $\alpha$max = $\alpha$maxBT ; la bielle d'orientation, de longueur LBO, relie la manivelle d'orientation au levier d'orientation en un point CO de coordonnées ($x_{BO}CO$, $y_{BO}CO$) dans le repère $BOx_{BO}y_{BO}$, la longueur LBO et les coordonnées ($x_{BO}CO$, $y_{BO}CO$) étant solutions du système formé par les trois équations suivantes :

$$\text{(Eq. A2)} \quad LBO = [(xL + x_{BO}CO * \cos(\alpha max) - y_{BO}CO * \sin(\alpha max) + \rho)^2 + (x_{BO}CO * \sin(\alpha max) + y_{BO}CO * \cos(\alpha max) - (yM - yL))^2]^{1/2}$$

$$\text{(Eq. B2)} \quad LBO = [(xL + x_{BO}CO * \cos(-\alpha max) - y_{BO}CO * \sin(-\alpha max) - \rho)^2 + (x_{BO}CO * \sin(-\alpha max) + y_{BO}CO * \cos(-\alpha max) - (yM - yL))^2]^{1/2}$$

$$\text{(Eq. C2)} \quad LBO = [(xL + x_{BO}CO)^2 + (y_{BO}CO - (yM - yL))^2 + \rho^2]^{1/2}$$

avec : $\rho = \rho O$, $yM = yMO$, $xL = xBO$, $yL = yBO$, $\alpha max = \alpha maxBO$.

Selon des modes particuliers de réalisation, le dispositif peut présenter d'autres caractéristiques parmi les suivantes :

- caractéristique 2 : le dispositif, satisfaisant la première caractéristique, comporte une seconde manivelle de translation sur l'arbre à manivelles, une seconde bielle de translation, un second levier de translation, un ou des moyens de couplage en rotation entre le second levier de translation et le bras, ces pièces étant disposées et dimensionnées de la manière suivante : la seconde manivelle de translation est de rayon $\rho T'$, située à la coordonnée $yMT'$ et déphasée de 180 degrés par rapport à la première manivelle de translation ; le second levier de translation est articulé en rotation selon un axe parallèle à Oz, cet axe de rotation coupant le plan Oxy en un point BT' de coordonnées $(xBT', yBT', 0)$ dans le repère Oxyz, ce second levier de translation étant muni d'un repère orthonormé direct $BT'x_{BT'}y_{BT'}z_{BT'}$, $BTz_{BT}$ étant orienté comme Oz, $BT'x_{BT'}$ étant orienté comme Ox lorsque le second levier de translation est en position de rotation neutre, sa demi-amplitude de rotation, mesurée à partir de l'axe Ox, étant avec la même convention de signe l'opposée de celle du premier levier de translation, soit $-\alpha maxBT$ ; la seconde bielle de translation, de longueur LBT', relie la seconde manivelle de translation au second levier de translation en un point CT' de coordonnées $(x_{BT'}CT', y_{BT'}CT')$ dans le repère $BT'x_{BT'}y_{BT'}$, la longueur LBT' et les coordonnées $(x_{BT'}CT', y_{BT'}CT')$ étant solutions du système formé par les trois équations suivantes :

$$\text{(Eq. A3)} \quad LBT' = [(xL + x_{BT}CT' * \cos(\alpha max) - y_{BT}CT' * \sin(\alpha max) + \rho)^2$$
$$+ (x_{BT}CT' * \sin(\alpha max) + y_{BT}CT' * \cos(\alpha max) - (yM - yL))^2]^{1/2}$$

$$\text{(Eq. B3)} \quad LBT' = [(xL + x_{BT}CT' * \cos(-\alpha max) - y_{BT}CT' * \sin(-\alpha max) - \rho)^2$$
$$+ (x_{BT}CT' * \sin(-\alpha max) + y_{BT}CT' * \cos(-\alpha max) - (yM - yL))^2]^{1/2}$$

$$\text{(Eq. C3)} \quad LBT' = [(xL + x_{BT}CT')^2 + (y_{BT}CT' - (yM - yL))^2 + \rho^2]^{1/2}$$

avec : $\rho = \rho T$, $yM = yMT'$, $xL = xBT'$, $yL = yBT'$, $\alpha max = -\alpha maxBT$

- caractéristique 3 : le dispositif, satisfaisant la caractéristique 1 ou la caractéristique 2, comporte une seconde manivelle d'orientation sur l'arbre à manivelles, une seconde bielle d'orientation, un second levier d'orientation, un ou des moyens de couplage en rotation entre le second levier d'orientation et la base d'orientation, ces pièces étant disposées et dimensionnées de la manière suivante : la seconde manivelle d'orientation est de rayon $\rho O'$, située à la coordonnée $yMO'$ et déphasée de 180 degrés par rapport à la première manivelle d'orientation ; le second levier d'orientation est articulé en rotation selon un axe parallèle à Oz, cet axe de rotation coupant le plan Oxy en un point BO' de coordonnées $(xBO', yBO', 0)$ dans le repère Oxyz, ce second levier d'orientation étant muni d'un repère orthonormé direct $BO'x_{BO'}y_{BO'}z_{BO'}$, $BTz_{BO'}$ étant orienté comme Oz, $BO'x_{BO'}$ étant orienté comme Ox lorsque le second levier d'orientation est en position de rotation neutre, sa demi-amplitude de rotation, mesurée à partir de l'axe Ox, étant avec la même convention de signe l'opposée de celle du premier levier d'orientation, soit $-\alpha maxBO$ ; la seconde bielle d'orientation, de longueur LBO', relie la seconde manivelle d'orientation au second levier d'orientation en un point CO' de coordonnées $(x_{BO'}CO', y_{BO'}CO')$ dans le repère $BO'x_{BO'}y_{BO'}$, la longueur LBO' et les coordonnées $(x_{BO'}CO', y_{BO'}CO')$ étant solutions du système formé par les trois équations suivantes :

$$\text{(Eq. A4)} \quad LBO' = [(xL + x_{BO'}CO' * \cos(\alpha max) - y_{BO'}CO' * \sin(\alpha max) + \rho)^2$$
$$+ (x_{BO'}CO' * \sin(\alpha max) + y_{BO'}CO' * \cos(\alpha max) - (yM - yL))^2]^{1/2}$$

$$\text{(Eq. B4)} \quad LBO' = [(xL + x_{BO'}CO' * \cos(-\alpha max) - y_{BO'}CO' * \sin(-\alpha max) - \rho)^2$$
$$+ (x_{BO'}CO' * \sin(-\alpha max) + y_{BO'}CO' * \cos(-\alpha max) - (yM - yL))^2]^{1/2}$$

$$\text{(Eq. C4)} \quad LBO' = [(xL + x_{BO'}CO')^2 + (y_{BO'}CO' - (yM - yL))^2 + \rho^2]^{1/2}$$

avec : $\rho = \rho O'$, $yM = yMO'$, $xL = xBO'$, $yL = yBO'$, $\alpha max = -\alpha maxBO$.

- caractéristique 4 : le dispositif, satisfaisant l'une quelconque des caractéristiques précédentes, comporte un ou des moyens de réglage de l'angle de déphasage $\varphi$, du rayon $\rho O$ et du rayon $\rho O'$ le cas échéant.

- caractéristique 5 : le dispositif, satisfaisant l'une quelconque des caractéristiques précédentes, comporte un ou des moyens de couplage avec un ou plusieurs systèmes fournissant de l'énergie à l'arbre à manivelles ou prélevant de l'énergie sur l'arbre à manivelles.

- caractéristique 6 : le dispositif, satisfaisant l'une quelconque des caractéristiques précédentes, comporte sur l'arbre à manivelles un ou des moyens permettant à un ou plusieurs utilisateurs d'entraîner ledit arbre en rotation, tels qu'une ou plusieurs poignées sur une ou plusieurs manivelles, une ou plusieurs pédales sur une ou plusieurs manivelles, un ou plusieurs câbles reliant une ou plusieurs manivelles à une ou plusieurs poignées via une ou plusieurs poulies de renvoi éventuelles.

- caractéristique 7 : le dispositif, satisfaisant l'une quelconque des caractéristiques précédentes, comporte sur l'arbre à manivelle une paire de pédales par utilisateur entraînant ledit arbre et, pour chaque pédale, deux tiges, la première tige étant sensiblement de la longueur de la jambe de l'utilisateur, la première extrémité de la première tige étant articulée, sur la pédale, en rotation selon un axe parallèle à Oy, la deuxième extrémité de la première tige étant articulée, sur la première extrémité de la deuxième tige, en rotation selon un axe parallèle à Oy, la deuxième tige étant sensiblement de la longueur de la cuisse de l'utilisateur, la deuxième extrémité de la deuxième tige étant articulée en rotation selon un axe parallèle à Oy et proche de la hanche de l'utilisateur, un moyen de préhension pour une main de l'utilisateur, tel qu'une poignée, étant fixé sur l'une ou l'autre tige, de préférence à proximité de l'articulation entre la première et la deuxième tige.

- caractéristique 8 : le dispositif, satisfaisant l'une quelconque des caractéristiques précédentes, comporte un ou des moyens de couplage avec un ou plusieurs autres dispositifs selon l'invention.

- caractéristique 9 : le dispositif, satisfaisant l'une quelconque des caractéristiques précédentes, comporte un ou plusieurs ensembles supplémentaires formés par un bras, une base d'orientation, un support d'élément propulsif terminal et des moyens de couplage en rotation entre cette base d'orientation et ce support d'élément propulsif terminal, lesdits éléments supplémentaires étant organisés entre eux de la même manière que cela est défini dans la première caractéristique pour le bras de base, la base d'orientation et le support d'élément propulsif de base, chaque bras supplémentaire ayant son axe de rotation parallèle à Oz éventuellement distinct de celui du bras de base, et étant commandé en rotation par le ou les leviers de translation, chaque base d'orientation supplémentaire étant commandée en rotation par le ou les leviers d'orientation.

## Présentation des figures

Les dessins annexés illustrent l'invention:

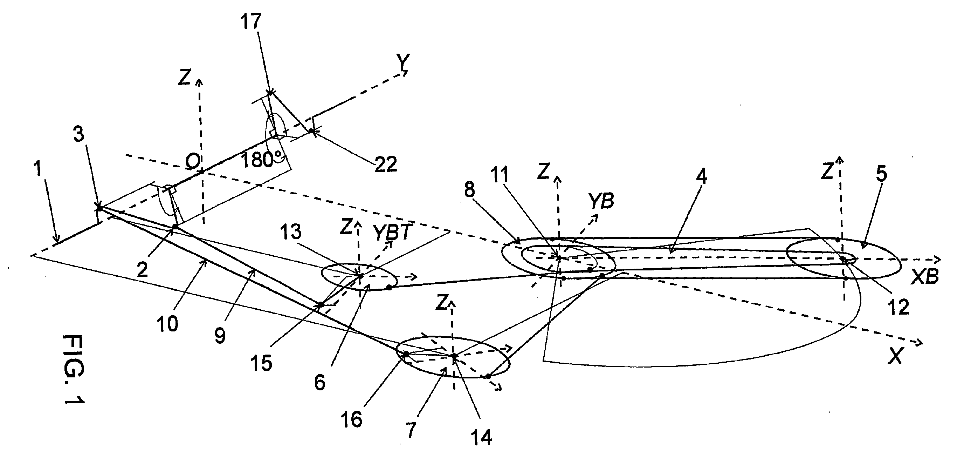

- La figure 1 représente le schéma de principe du dispositif selon l'invention, avec quatre manivelles mais seulement deux leviers pour une meilleure lisibilité ; les deux leviers, la base d'orientation et le support d'élément propulsif terminal sont représentés par des disques ; le bras est représenté par l'enveloppe globale de deux disques centrés respectivement sur la base d'orientation et sur le support d'élément propulsif terminal ; les points d'accroche de la bielle de translation et de la bielle d'orientation sont représentés par des points ; les moyens de couplage entre les leviers et le bras ou la base d'orientation d'une part, et entre la base d'orientation et le support d'élément propulsif terminal d'autre part, sont représentés par des bielles dont les points d'accroche sont représentés par des points.

- La figure 2 représente, en vue de dessous, le dispositif selon l'invention tel que réalisé dans l'exemple non limitatif exposé dans la suite de ce texte.

- La figure 3 représente, en projection selon Oy, le même exemple de réalisation, l'arbre à manivelles étant tourné de 180 degrés par rapport à la précédente figure, et certaines pièces ne figurant pas pour une meilleure lisibilité ; dans le même objectif de lisibilité de la figure, le levier d'orientation représenté et la base d'orientation ont été décalés vers le bas.

- La figure 4 représente, en projection selon Oy, pour le même exemple de réalisation, une pièce du dispositif permettant le réglage du déphasage $\varphi$ et du rayon $\rho O$.

- La figure 5 représente, en vue de dessus, pour le même exemple de réalisation, le support d'élément propulsif terminal et l'aileron utilisé comme élément propulsif terminal.

- La figure 6 représente, en projection selon Oy, pour le même exemple de réalisation, le support d'élément propulsif terminal et l'aileron utilisé comme élément propulsif terminal.

Exposé d'un mode de réalisation

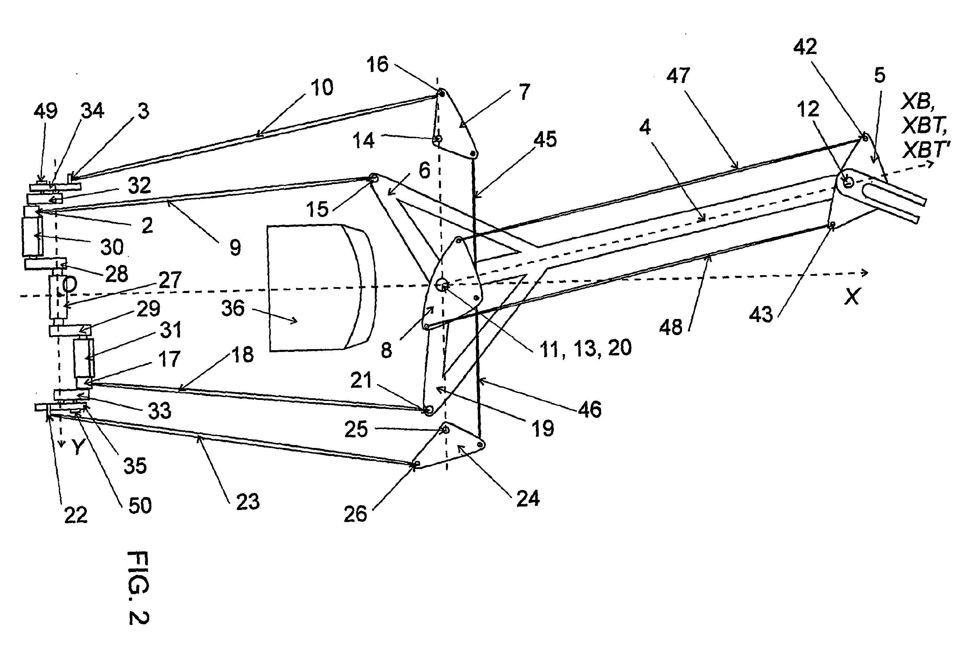

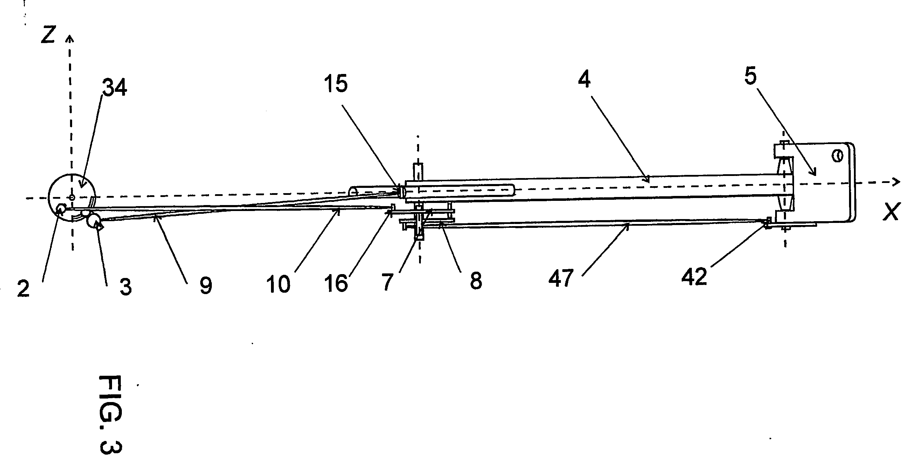

Selon un exemple particulier de réalisation non limitatif et en référence aux figures 2 à 6, le dispositif est installé sur un bateau, l'axe Ox correspondant à l'axe longitudinal du bateau orienté vers l'arrière et éventuellement incliné par rapport à l'horizontale, l'axe Oz étant assimilé à la verticale et orienté vers le haut. Le bateau est mû par l'énergie d'un utilisateur qui, assis sur le siège (36), utilise les pédales (30) et (31) pour entraîner le dispositif. Le dispositif comporte un arbre à manivelles décomposé en un boîtier de pédalier de bicyclette (27), centré au point O et d'axe Oy et servant de liaison avec le bateau, deux pièces (28, 29) du type manivelle de pédalier de bicyclette emmanchées sur le boîtier (27), deux pédales (30, 31) fixées aux pièces (28, 29), deux points d'accroche (2, 17) constituant les manivelles de translation et reliés aux pédales (30, 31), deux tiges (32, 33) fixées rigidement à l'axe de chaque pédale (30, 31), l'extrémité libre de chaque pièce (32, 33) se situant sur l'axe Oy, deux pièces (34, 35) permettant le réglage du déphasage φ et du rayon ρO ou ρO', dont une sera détaillée plus loin, fixées aux tiges (32, 33) et supportant les manivelles d'orientation (3, 22), une pièce allongée dite bras (4), un support d'élément propulsif terminal (5) d'axe de rotation vertical (12), un aileron (39), une base d'orientation (8), deux leviers de translation (6, 19) fixés rigidement au bras (4) et ayant de ce fait leur axe de rotation vertical (13, 20) commun avec celui (11) du bras (4), deux leviers d'orientation (7, 24) d'axe de rotation vertical (14, 25), deux bielles de translation (9, 18) reliant les manivelles de translation (2, 17) aux points d'accroche (15, 21) des leviers de translation (6, 19), deux bielles d'orientation (10,23) reliant les manivelles d'orientation (3, 22) aux points d'accroche (16, 26) des leviers d'orientation (7, 24), deux bielles (45, 46) de couplage entre les leviers d'orientation (7, 24) et la base d'orientation (8), deux bielles (47, 48) de couplage reliant la base d'orientation (8) aux points d'accroche (42, 43) du support d'élément propulsif terminal (5).

Le fait de fixer sur les pédales (30, 31) les points d'accroche (2, 17) des bielles de translation (9, 18) permet de réduire les frottements des pédales (30, 31) sur leurs axes, la pression exercée par les pieds de l'utilisateur étant de ce fait communiquée de manière plus directe aux bielles (9, 18) ; de plus les pédales (30, 31) effectuant une faible rotation à chaque cycle de pédalage, les points d'accroche (2, 17) eux-mêmes ont un frottement réduit.

De manière générale, les points d'accroche des bielles peuvent être réalisés au moyen de paliers lisses sur des segments de tiges d'acier, lesquelles peuvent être des boulons.

Le bras (4) peut être réalisé au moyen d'un tube d'aluminium ; les leviers de translation (6, 19) sont constitués chacun de deux tubes d'aluminium, chaque couple de tube formant un V de base le point d'accroche (15, 21) ; ces tubes sont fixés rigidement sur le bras (4) par soudage, collage, stratification, boulonnage ou tout autre moyen convenable. Les points d'accroche (15, 21) des bielles de translation (9, 18) sont positionnés au moyen des équations et de leur résolution décrites dans la présente invention.

L'axe de rotation (11, 13, 20) de l'ensemble rigide formé par le bras (4) et les leviers de translation (6, 19) est constitué par une tige d'acier sur laquelle s'adapte par en-dessous la base de rotation (8), cette tige d'acier étant reliée au bateau par ses deux extrémités au moyen de paliers lisses non figurés.

La pièce (34) est constituée d'un disque plat en aluminium, percé de deux lumières (37, 38) ; et d'un moyen de fixation en son centre sur la tige (32) ; la lumière (37) est radiale : elle permet de positionner la manivelle d'orientation (3), matérialisée par exemple par un boulon, avec un rayon ρO variable ; la lumière (38) est en arc de cercle concentrique à la pièce (34) elle-même, et permet au moyen d'un boulon (49) d'immobiliser la pièce (34) en rotation sur la tige (32) tout en réglant le déphasage φ; une valeur de 90 degrés peut être utilisée. A ce propos, il convient de tenir compte du déphasage induit par une différence de cote en z existant éventuellement entre les points d'accroche (15, 21) d'une part et (16, 26) d'autre part ; normalement, tous ces points devraient être à la même cote 0, mais une petite différence, eu égard à la distance entre l'arbre à manivelles (1) et l'axe de rotation (11), a peu d'influence sur la cinématique du dispositif hormis pour le déphasage si l'on souhaite un réglage précis de ce paramètre. La pièce (35) est analogue à la pièce (34) à une rotation près, de 180 degrés autour d'un diamètre. Son déphasage est réglé au moyen du boulon (50). Les pièces (34, 35) peuvent être allégées en supprimant la partie du disque non nécessaire à l'établissement des lumières et de la fixation centrale.

La base d'orientation (8) est réalisée au moyen d'une plaque d'aluminium formant globalement un triangle isocèle : cette plaque triangulaire est percée au milieu de sa base à un diamètre suffisant pour recevoir un palier lisse adaptable sur la tige d'acier qui sert d'axe de rotation à l'ensemble formé par le bras (4) et les leviers de translation (6, 19) ; deux points d'accroche pour les bielles (47, 48), sont installés sur la base du triangle isocèle de la plaque, de part et d'autre de l'axe du palier, ces deux points d'accroche et l'axe du palier étant alignés. Un troisième point d'accroche, prévu pour recevoir à la fois les deux bielles (45, 46) est installé sur la hauteur principale de la plaque triangulaire.

Chaque levier d'orientation (7, 24) est réalisé au moyen d'une plaque d'aluminium de forme globalement triangulaire : cette plaque est percée à un diamètre suffisant pour recevoir un palier lisse correspondant à l'axe de rotation (14, 25) matérialisé par une tige d'acier fixée au bateau ; les points d'accroche (16, 26) pour les bielles d'orientation (10, 23) sont positionnés grâce aux équations et à leur résolution décrites dans la présente invention ; les points d'accroche des bielles (45, 46) sont positionnés de façon que lesdites bielles forment des parallélogrammes articulés dont les bases respectives sont formées par les points (11, 14) et (11,25).

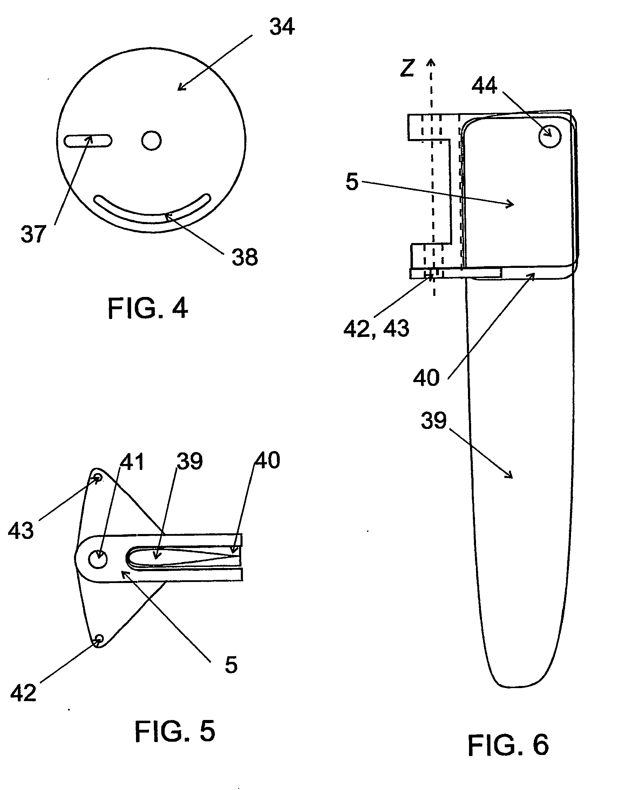

Le support d'élément propulsif terminal (5) est représenté en détail sur les figures 5 et 6. Il peut être réalisé en aluminium ou en matériau composite et se compose principalement d'un profil vertical en U dans lequel vient se loger la pièce (40) à flancs plats qui reçoit elle-même l'aileron (39), et d'un partie horizontale triangulaire qui porte les points d'accroche (42, 43) des bielles (47, 48). Le trou (44) sert à l'emmanchement d'un axe solidarisant le support d'élément propulsif terminal (5) et l'ensemble formé par l'aileron (39) et la pièce (40), tout en permettant au dit ensemble de pivoter sur l'axe ; des moyens de rappel, par exemple élastiques, permettent de maintenir l'aileron (39) en position verticale, et ne sont pas représentés sur les figures. Un trou (41) d'axe vertical permet de relier, en rotation d'axe vertical, le support d'élément propulsif terminal (5) à l'extrémité du bras (4) au moyen d'une tige d'acier verticale selon l'axe (12).

De manière générale, les deux bielles sont réalisées en câble d'acier, en fibre synthétique ou en matériau composite et comportent à leurs extrémités des trous ou un moyen permettant leur adaptation aux paliers des points d'accroche ; concernant les bielles de translation (9, 18) et les bielles d'orientation (10, 23), leurs longueurs respectives sont fournies par les équations et leur résolution décrites dans la présente invention.

Le dispositif selon l'invention est particulièrement destiné au déplacement de véhicules autonomes en énergie, et à la génération d'énergie à partir d'un déplacement.

**Revendications**

1. Dispositif muni d'un repère orthonormé direct Oxyz, destiné soit, à partir de son entraînement en rotation du fait de son ou de ses utilisateurs ou au moyen d'un système moteur à animer un élément propulsif terminal, qui peut être un aileron aérodynamique ou hydrodynamique ou une roue ou un patin à glace ou à neige ou une combinaison quelconque desdits éléments, d'un mouvement alternatif à deux composantes de translation et de rotation à des fins de déplacement dans divers milieux, soit, réciproquement, à partir du mouvement alternatif à deux composantes de translation et de rotation d'un élément propulsif terminal de même type à entraîner en rotation un générateur d'énergie, dispositif comportant un arbre à manivelles (1) porteur de deux manivelles dont la première (2), de rayon $\rho T$, est dite de translation et dont la seconde (3), de rayon $\rho O$, est dite d'orientation, une pièce allongée dans le plan Oxy dite bras (4) articulée en rotation dans le repère Oxyz, une pièce dite support d'élément propulsif terminal (5) articulée en rotation sur le bras (4) et possédant un ou des moyens de liaison avec un élément propulsif terminal, une pièce dite levier de translation (6) articulée en rotation dans le repère Oxyz, une pièce dite levier d'orientation (7) articulée en rotation dans le repère Oxyz, une pièce dite base d'orientation (8) articulée en rotation dans le repère Oxyz, une bielle dite de translation (9), une bielle dite d'orientation (10), un ou des moyens de couplage en rotation entre le levier de translation (6) et le bras (4), un ou des moyens de couplage en rotation entre le levier d'orientation (7) et la base d'orientation (8), un ou des moyens de couplage en rotation entre la base d'orientation (8) et le support d'élément propulsif terminal (5), ces pièces étant disposées et dimensionnées de la manière suivante : l'axe de rotation de l'arbre à manivelles (1) est disposé sur l'axe Oy, les deux manivelles de translation (2) et d'orientation (3) étant situées par rapport au plan Oxz aux coordonnées respectives yMT et yMO et déphasées entre elles d'un angle $\varphi$; le bras (4) est articulé en rotation selon un axe parallèle à Oz, cet axe de rotation coupant le plan Oxy en un point B (11) de coordonnées (xB, yB, 0) dans le repère Oxyz, le bras (4) étant muni d'un repère orthonormé direct $Bx_By_Bz_B$, $Bz_B$ étant orienté comme Oz ; le support d'élément propulsif terminal (5) étant articulé, sur le bras (4), en rotation selon un axe parallèle à l'axe $Bz_B$ et coupant $Bx_B$ en un point S (12) de coordonnées ($x_BS$, 0, 0) dans le repère $Bx_By_Bz_B$ ; la base d'orientation (8) est articulée en rotation selon l'axe $Bz_B$ ; le levier de translation (6) est articulé en rotation selon un axe parallèle à Oz, cet axe de rotation coupant le plan Oxy en un point BT (13) de coordonnées (xBT, yBT, 0) dans le repère Oxyz, ce levier de translation (6) étant muni d'un repère orthonormé direct $BTx_{BT}y_{BT}z_{BT}$, $BTz_{BT}$ étant orienté comme Oz, $BTx_{BT}$ étant orienté comme Ox lorsque le levier de translation (6) est en position de rotation neutre, sa demi-amplitude de rotation, mesurée à partir de l'axe Ox, étant notée $\alpha maxBT$, positive par convention lorsqu'un déplacement de la manivelle de translation (2) vers les x positifs entraîne une rotation négative du levier de translation (6), et négative sinon ; le levier d'orientation (7) est articulé en rotation selon un axe parallèle à Oz, cet axe de rotation coupant le plan Oxy en un point BO (14) de coordonnées (xBO, yBO, 0) dans le repère Oxyz, ce levier d'orientation (7) étant muni d'un repère orthonormé direct $BOx_{BO}y_{BO}z_{BO}$, $BOz_{BO}$ étant orienté comme Oz, $BOx_{BO}$ étant orienté comme Ox lorsque le levier d'orientation (7) est en position de rotation neutre, sa demi-amplitude de rotation, mesurée à partir de l'axe Ox, étant notée $\alpha maxBO$, positive par convention lorsqu'un déplacement de la manivelle d'orientation (3) vers les x positifs entraîne une rotation négative du levier d'orientation (7), et négative sinon ; la bielle de translation (9), de longueur LBT, relie la manivelle de translation (2) au levier de translation (6) en un point CT (15) de coordonnées ($x_{BT}CT$, $y_{BT}CT$) dans le repère $BTx_{BT}y_{BT}$, la longueur LBT et les coordonnées ($x_{BT}CT$, $y_{BT}CT$) étant solutions du système formé par les trois équations suivantes

$$\text{(Eq. A1)} \quad LBT = [(xL + x_{BT}CT * \cos(\alpha max) - y_{BT}CT * \sin(\alpha max) + \rho)^2$$
$$+ (x_{BT}CT * \sin(\alpha max) + y_{BT}CT * \cos(\alpha max) - (yM - yL))^2]^{1/2}$$

$$\text{(Eq. B1)} \quad LBT = [(xL + x_{BT}CT * \cos(-\alpha max) - y_{BT}CT * \sin(-\alpha max) - \rho)^2$$
$$+ (x_{BT}CT * \sin(-\alpha max) + y_{BT}CT * \cos(-\alpha max) - (yM - yL))^2]^{1/2}$$

$$\text{(Eq. C1)} \quad LBT = [(xL + x_{BT}CT)^2 + (y_{BT}CT - (yM - yL))^2 + \rho^2]^{1/2}$$

avec : $\rho = \rho T$, $yM = yMT$, $xL = xBT$, $yL = yBT$, $\alpha max = \alpha maxBT$ ;
la bielle d'orientation (10), de longueur LBO, relie la manivelle d'orientation (3) au levier d'orientation (7) en un point CO (16) de coordonnées $(x_{BO}CO, y_{BO}CO)$ dans le repère $BOx_{BO}y_{BO}$, la longueur LBO et les coordonnées $(x_{BO}CO, y_{BO}CO)$ étant solutions du système formé par les trois équations suivantes :

$$\text{(Eq. A2)} \quad LBO = [(xL + x_{BO}CO * \cos(\alpha max) - y_{BO}CO * \sin(\alpha max) + \rho)^2$$
$$+ (x_{BO}CO * \sin(\alpha max) + y_{BO}CO * \cos(\alpha max) - (yM - yL))^2]^{1/2}$$

$$\text{(Eq. B2)} \quad LBO = [(xL + x_{BO}CO * \cos(-\alpha max) - y_{BO}CO * \sin(-\alpha max) - \rho)^2$$
$$+ (x_{BO}CO * \sin(-\alpha max) + y_{BO}CO * \cos(-\alpha max) - (yM - yL))^2]^{1/2}$$

$$\text{(Eq. C2)} \quad LBO = [(xL + x_{BO}CO)^2 + (y_{BO}CO - (yM - yL))^2 + \rho^2]^{1/2}$$

avec : $\rho = \rho O$, $yM = yMO$, $xL = xBO$, $yL = yBO$, $\alpha max = \alpha maxBO$.

**2.** Dispositif selon la revendication 1 **caractérisé en ce qu'**il comporte une seconde manivelle de translation (17) sur l'arbre à manivelles (1), une seconde bielle de translation (18), un second levier de translation (19), un ou des moyens de couplage en rotation entre le second levier de translation (18) et le bras (4), ces pièces étant disposées et dimensionnées de la manière suivante: la seconde manivelle de translation (17) est de rayon $\rho T'$, située à la coordonnée yMT' et déphasée de 180 degrés par rapport à la première manivelle de translation (2) ; le second levier de translation (19) est articulé en rotation selon un axe parallèle à Oz, cet axe de rotation coupant le plan Oxy en un point BT' (20) de coordonnées (xBT', yBT', 0) dans le repère Oxyz, ce second levier de translation (19) étant muni d'un repère orthonormé direct $BT'x_{BT'}y_{BT'}z_{BT'}$, $BTz_{BT'}$ étant orienté comme Oz, $BT'x_{BT'}$ étant orienté comme Ox lorsque le second levier de translation (19) est en position de rotation neutre, sa demi-amplitude de rotation, mesurée à partir de l'axe Ox, étant avec la même convention de signe l'opposée de celle du premier levier de translation (6), soit $-\alpha maxBT$ ; la seconde bielle de translation (18), de longueur LBT', relie la seconde manivelle de translation (17) au second levier de translation (19) en un point CT' (21) de coordonnées $(x_{BT'}CT', y_{BT'}CT')$ dans le repère $BT'x_{BT'}y_{BT'}$, la longueur LBT' et les coordonnées $(x_{BT'}CT', y_{BT'}CT')$ étant solutions du système formé par les trois équations suivantes :

$$\text{(Eq. A3)} \quad LBT' = [(xL + x_{BT}CT' * \cos(\alpha max) - y_{BT}CT' * \sin(\alpha max) + \rho)^2$$
$$+ (x_{BT}CT' * \sin(\alpha max) + y_{BT}CT' * \cos(\alpha max) - (yM - yL))^2]^{1/2}$$

$$\text{(Eq. B3)} \quad LBT' = [(xL + x_{BT}CT' * \cos(-\alpha max) - y_{BT}CT' * \sin(-\alpha max) - \rho)^2$$
$$+ (x_{BT}CT' * \sin(-\alpha max) + y_{BT}CT' * \cos(-\alpha max) - (yM - yL))^2]^{1/2}$$

$$\text{(Eq. C3)} \quad LBT' = [(xL + x_{BT}CT')^2 + (y_{BT}CT' - (yM - yL))^2 + \rho^2]^{1/2}$$

avec : $\rho = \rho T'$, $yM = yMT'$, $xL = xBT'$, $yL = yBT$, $\alpha max = -\alpha maxBT$

**3.** Dispositif selon la revendication 1 ou la revendication 2 **caractérisé en ce qu'**il comporte une seconde manivelle d'orientation (22) sur l'arbre à manivelles (1), une seconde bielle d'orientation (23), un second levier d'orientation (24), un ou des moyens de couplage en rotation entre le second levier d'orientation (24) et la base d'orientation (8), ces pièces étant disposées et dimensionnées de la manière suivante : la seconde manivelle d'orientation (22) est de rayon $\rho O'$, située à la coordonnée yMO' et déphasée de 180 degrés par rapport à la première manivelle d'orientation (3) ; le second levier d'orientation (24) est articulé en rotation selon un axe parallèle à Oz, cet axe de rotation coupant le plan Oxy en un point BO' (25) de coordonnées (xBO', yBO', 0) dans le repère Oxyz, ce second levier d'orientation (24) étant muni d'un repère orthonormé direct BO'$x_{BO'}y_{BO'}z_{BO'}$, BT$z_{BO}$, étant orienté comme Oz, BO'$x_{BO}$, étant orienté comme Ox lorsque le second levier d'orientation (24) est en position de rotation neutre, sa demi-amplitude de rotation, mesurée à partir de l'axe Ox, étant avec la même convention de signe l'opposée de celle du premier levier d'orientation (7), soit -$\alpha$maxBO ; la seconde bielle d'orientation (23), de longueur LBO', relie la seconde manivelle d'orientation (22) au second levier d'orientation (24) en un point CO' (26) de coordonnées ($x_{BO}$,CO', $y_{BO}$, CO') dans le repère BO'$x_{BO'}y_{BO'}$, la longueur LBO' et les coordonnées ($x_{BO'}$CO', $y_{BO'}$CO') étant solutions du système formé par les trois équations suivantes :

$$\text{(Eq. A4)} \quad LBO' = [(xL + x_{BO'}CO' * \cos(\alpha max) - y_{BO'}CO' * \sin(\alpha max) + \rho)^2$$
$$+ (x_{BO'}CO' * \sin(\alpha max) + y_{BO'}CO' * \cos(\alpha max) - (yM - yL))^2]^{1/2}$$

$$\text{(Eq. B4)} \quad LBO' = [(xL + x_{BO'}CO' * \cos(-\alpha max) - y_{BO'}CO' * \sin(-\alpha max) - \rho)^2$$
$$+ (x_{BO'}CO' * \sin(-\alpha max) + y_{BO'}CO' * \cos(-\alpha max) - (yM - yL))^2]^{1/2}$$

$$\text{(Eq. C4)} \quad LBO' = [(xL + x_{BO'}CO')^2 + (y_{BO'}CO' - (yM - yL))^2 + \rho^2]^{1/2}$$

avec : $\rho = \rho O'$, $yM = yMO'$, $xL = xBO'$, $yL = yBO'$, $\alpha max = -\alpha maxBO$.

**4.** Dispositif selon l'une quelconque des revendications précédentes **caractérisé en ce qu'**il comporte un ou des moyens de réglage de l'angle de déphasage $\varphi$, du rayon $\rho O$ et du rayon $\rho O'$ le cas échéant.

**5.** Dispositif selon l'une quelconque des revendications précédentes **caractérisé en ce qu'**il comporte un ou des moyens de couplage avec un ou plusieurs systèmes fournissant de l'énergie à l'arbre à manivelles (1) ou prélevant de l'énergie sur l'arbre à manivelles (1).

**6.** Dispositif selon l'une quelconque des revendications précédentes **caractérisé en ce qu'**il comporte sur l'arbre à manivelles (1) un ou des moyens permettant à un ou plusieurs utilisateurs d'entraîner ledit arbre en rotation, tels qu'une ou plusieurs poignées sur une ou plusieurs manivelles, une ou plusieurs pédales sur une ou plusieurs manivelles, un ou plusieurs câbles reliant une ou plusieurs manivelles à une ou plusieurs poignées via une ou plusieurs poulies de renvoi éventuelles.

**7.** Dispositif selon l'une quelconque des revendications précédentes **caractérisé en ce qu'**il comporte sur l'arbre à manivelle (1) une paire de pédales par utilisateur entraînant ledit arbre et, pour chaque pédale, deux tiges, la première tige étant sensiblement de la longueur de la jambe de l'utilisateur, la première extrémité de la première tige étant articulée, sur la pédale, en rotation selon un axe parallèle à Oy, la deuxième extrémité de la première tige étant articulée, sur la première extrémité de la deuxième tige, en rotation selon un axe parallèle à Oy, la deuxième tige étant sensiblement de la longueur de la cuisse de l'utilisateur, la deuxième extrémité de la deuxième tige étant articulée en rotation selon un axe parallèle à Oy et proche de la hanche de l'utilisateur, un moyen de préhension pour une main de l'utilisateur, tel qu'une poignée, étant fixé sur l'une ou l'autre tige, de préférence à proximité de l'articulation entre la première et la deuxième tige.

8. Dispositif selon l'une quelconque des revendications précédentes **caractérisé en ce qu'**il comporte un ou des moyens de couplage avec un ou plusieurs autres dispositifs selon l'invention.

9. Dispositif selon l'une quelconque des revendications précédentes **caractérisé en ce qu'**il comporte un ou plusieurs ensembles supplémentaires formés chacun par un bras, une base d'orientation, un support d'élément propulsif terminal et des moyens de couplage en rotation entre cette base d'orientation et ce support d'élément propulsif terminal, ces éléments supplémentaires étant, dans chaque ensemble supplémentaire, organisés entre eux de la même manière que cela est défini dans la première revendication pour le bras de base (4), la base d'orientation de base (8) et le support d'élément propulsif de base (5), chaque bras supplémentaire ayant son axe de rotation parallèle à Oz éventuellement distinct de celui du bras de base (4), et étant commandé en rotation par le ou les leviers de translation (6, 19), chaque base d'orientation supplémentaire étant commandée en rotation par le ou les leviers d'orientation (7, 24).

## Claims

1. Device, with a direct orthonormal frame Oxyz, aimed either, from its driving in rotation by its user(s) or by an engine, to drive a propelling element, which can be an aerodynamic or hydrodynamic aileron, or a wheel or an ice or snow skate or any combination of said items, with a reciprocating movement comprising two translation and rotation components, either, vice versa, from the reciprocating movement comprising two translation and rotation components of a similar propelling element, to drive in rotation a generator, device comprising a shaft (1) with two cranks the first one (2) of radius pT called translatory crank the second one (3) of radius $\rho$O called rotation crank, a long part in the plane Oxy called arm (4) articulated in rotation, a part called support of propelling element (5) articulated in rotation with the arm (4) and having one or several connection means with a propelling element, a part called translatory lever (6) articulated in rotation, a part called orientation lever (7) articulated in rotation, a part called orientation part (8) articulated in rotation, a rod called translatory rod (9), a rod called orientation rod (10), one or several coupling means in rotation between translatory lever (6) and arm (4), one or several coupling means in rotation between orientation lever (7) and orientation part (8), one or several coupling means in rotation between orientation part (8) and support of propelling element (5), these parts being arranged and proportioned as follows : the rotation axis of shaft (1) is along the axis Oy, the translatory (2) and orientation (3) cranks having the respective y coordinates yMT and yMO and a $\varphi$ phase difference; the arm (4) is articulated in rotation on an axis parallel to Oz, this rotation axis crossing the plane Oxy at the point B (11) of coordinates (xB, yB, 0) in Oxyz, the arm (4) having a direct orthonormal frame $Bx_By_Bz_B$, where $Bz_B$ is directed like Oz ; the support of propelling element (5) being articulated, on arm (4), in rotation on an axis parallel to the axis $Bz_B$ and crossing $Bx_B$ at the point S (12) of coordinates ($x_B$S, 0, 0) in $Bx_By_Bz_B$ ; the orientation part (8) is articulated in rotation on the axis $Bz_B$; the translatory lever (6) is articulated in rotation on an axis parallel to Oz, this axis crossing the plane Oxy at a point BT (13) of coordinates (xBT, yBT, 0) in Oxyz, this translatory lever (6) having a direct orthonormal frame $BTx_{BT}y_{BT}z_{BT}$, $BTz_{BT}$ being directed like Oz, $BTx_{BT}$ being directed like Ox when the translatory lever (6) has a neutral rotation position, its half rotation amplitude, measured from the axis Ox, being called $\alpha$maxBT, positive when a shifting of the translatory crank (2) to the positive x drives a negative rotation of the translatory lever (6), and negative else ; the orientation lever (7) is articulated in rotation on an axis parallel to Oz, this axis crossing the plane Oxy at a point BO (14) of coordinates (xBO, yBO, 0) in Oxyz, this orientation lever (7) having a direct orthonormal frame $BOx_{BO}y_{BO}z_{BO}$, $BOz_{BO}$ being directed like Oz, $BOx_{BO}$ being directed like Ox when the orientation lever (7) has a position of neutral rotation, its half rotation amplitude, measured from the axis Ox, being called $\alpha$maxBO, positive when a shifting of the orientation crank (3)) to the positive x drives a negative rotation of the orientation lever (7), and negative else ; the translatory rod (9), of length LBT, connects the translatory crank (2) to the translatory lever (6) at a point CT (15) of coordinates ($x_{BT}$CT, $y_{BT}$CT) in $BTx_{BT}y_{BT}$, the length LBT and the coordinates ($x_{BT}$CT, $y_{BT}$CT) being solutions of the system consisting of the three following equations:

$$(\text{Eq. A1}) \quad LBT = [(xL + x_{BT}CT * \cos(\alpha max) - y_{BT}CT * \sin(\alpha max) + \rho)^2 + (x_{BT}CT * \sin(\alpha max) + y_{BT}CT * \cos(\alpha max) - (yM - yL))^2]^{1/2}$$

$$(\text{Eq. B1}) \quad LBT = [(xL + x_{BT}CT * \cos(-\alpha max) - y_{BT}CT * \sin(-\alpha max) - \rho)^2 + (x_{BT}CT * \sin(-\alpha max) + y_{BT}CT * \cos(-\alpha max) - (yM - yL))^2]^{1/2}$$

$$(Eq.\ C1)\quad LBT = [(xL + x_{BT}CT)^2 + (y_{BT}CT - (yM - yL))^2 + \rho^2]^{1/2}$$

where : $\rho = \rho T$, $yM = yMT$, $xL = xBT$, $yL = yBT$, $\alpha max = \alpha maxBT$ ;
the orientation rod (10), of length LBO, connects the orientation crank (3) to the orientation lever (7) at a point CO (16) of coordinates $(x_{BO}CO, y_{BO}CO)$ in $BOx_{BO}y_{BO}$, the length LBO and the coordinates $(x_{BO}CO, y_{BO}CO)$ being solutions of the system consisting of the three following equations :

$$(Eq.\ A2)\quad LBO = [(xL + x_{BO}CO * \cos(\alpha max) - y_{BO}CO * \sin(\alpha max) + \rho)^2$$
$$+ (x_{BO}CO * \sin(\alpha max) + y_{BO}CO * \cos(\alpha max) - (yM - yL))^2]^{1/2}$$

$$(Eq.\ B2)\quad LBO = [(xL + x_{BO}CO * \cos(-\alpha max) - y_{BO}CO * \sin(-\alpha max) - \rho)^2$$
$$+ (x_{BO}CO * \sin(-\alpha max) + y_{BO}CO * \cos(-\alpha max) - (yM - yL))^2]^{1/2}$$

$$(Eq.\ C2)\quad LBO = [(xL + x_{BO}CO)^2 + (y_{BO}CO - (yM - yL))^2 + \rho^2]^{1/2}$$

where : $\rho = \rho O$, $yM = yMO$, $xL = xBO$, $yL = yBO$, $\alpha max = \alpha maxBO$.

2. A device according to claim 1 further comprising a second translatory crank (17) on the shaft (1), a second translatory rod (18), a second translatory lever (19), one or several couplage means in rotation between the second translatory lever (19) and the arm (4), these parts being arranged and proportioned as follows: the second translatory crank (17) of radius $\rho T'$, is located at the coordinate yMT' and has a 180 degrees phase difference with the first translatory crank (2) ; the second translatory lever (19) is articulated in rotation on an axis parallel to Oz, this axis crossing the plane Oxy at a point BT' (20) of coordinates (xBT', yBT', 0) in Oxyz, this second translatory lever (19) having a direct orthonormal frame $BT'x_{BT'}y_{BT'}z_{BT'}$, $BTz_{BT'}$ being directed like Oz, $BT'x_{BT'}$ being directed like Ox when the second translatory lever (19) has a position of neutral rotation, its half rotation amplitude, measured from the axis Ox, being with the same sign convention the opposite of this one of the first translatory lever (6), i.e. $-\alpha maxBT$ ; the second translatory rod (18), of length LBT', connects the second translatory crank (17) to the second translatory lever (19) at a point CT' (21) of coordinates $(x_{BT'}CT', y_{BT'}CT')$ in $BT'x_{BT'}y_{BT'}$, the length LBT' and the coordinates $(x_{BT'}CT', y_{BT'}CT')$ being solutions of the system consisting of the three following equations :

$$(Eq.\ A3)\quad LBT' = [(xL + x_{BT}CT' * \cos(\alpha max) - y_{BT}CT' * \sin(\alpha max) + \rho)^2$$
$$+ (x_{BT}CT' * \sin(\alpha max) + y_{BT}CT' * \cos(\alpha max) - (yM - yL))^2]^{1/2}$$

$$(Eq.\ B3)\quad LBT' = [(xL + x_{BT}CT' * \cos(-\alpha max) - y_{BT}CT' * \sin(-\alpha max) - \rho)^2$$
$$+ (x_{BT}CT' * \sin(-\alpha max) + y_{BT}CT' * \cos(-\alpha max) - (yM - yL))^2]^{1/2}$$

$$(Eq.\ C3)\quad LBT' = [(xL + x_{BT}CT')^2 + (y_{BT}CT' - (yM - yL)))^2 + \rho^2]^{1/2}$$

where : $\rho = \rho T'$, $yM = yMT'$, $xL = xBT'$, $yL = yBT'$, $\alpha max = -\alpha maxBT$

3. A device according to claims 1 or 2 further comprising a second orientation crank (22) on shaft (1), a second orientation rod (23), a second orientation lever (24), one or several couplage means in rotation between the second orientation lever (24) and the orientation part (8), these parts being arranged and proportioned as follows : the second orientation crank (22) of radius $\rho O'$, is located at the coordinate yMO' and has a 180 degrees phase difference with the first orientation crank (3) ; the second orientation lever (24) is articulated in rotation on an axis parallel to Oz, this axis crossing the plane Oxy at a point BO' (25) of coordinates (xBO', yBO', 0) in Oxyz, this second orientation lever (24) having a direct orthonormal frame BO'$x_{BO'}y_{BO'}z_{BO'}$, BTz$_{BO'}$ being directed like Oz, BO'x$_{BO'}$ being directed like Ox when the second orientation lever (24) has a position of neutral rotation, its half rotation amplitude, measured from the axis Ox, being with the same sign convention the opposite of this one of the first orientation lever (7), i.e. -αmaxBO ; the second orientation rod (23), of length LBO', connects the second orientation crank (22) to the second orientation lever (24) at a point CO' (26) of coordinates (x$_{BO'}$CO', y$_{BO'}$CO') in BO'$x_{BO'}y_{BO'}$, the length LBO' and the coordinates (x$_{BO'}$CO', y$_{BO'}$CO') being solutions of the system consisting of the three following equations :

$$\text{(Eq. A4)} \quad LBO' = [(xL + x_{BO'}CO' * \cos(\alpha max) - y_{BO'}CO' * \sin(\alpha max) + \rho)^2$$
$$+ (x_{BO'}CO' * \sin(\alpha max) + y_{BO'}CO' * \cos(\alpha max) - (yM - yL))^2]^{1/2}$$

$$\text{(Eq. B4)} \quad LBO' = [(xL + x_{BO'}CO' * \cos(-\alpha max) - y_{BO'}CO' * \sin(-\alpha max) - \rho)^2$$
$$+ (x_{BO'}CO' * \sin(-\alpha max) + y_{BO'}CO' * \cos(-\alpha max) - (yM - yL))^2]^{1/2}$$

$$\text{(Eq. C4)} \quad LBO' = [(xL + x_{BO'}CO')^2 + (y_{BO'}CO' - (yM - yL))^2 + \rho^2]^{1/2}$$

where : $\rho = \rho O'$, yM = yMO', xL = xBO', yL = yBO', αmax = -αmaxBO.

4. A device according to any previous claim further comprising one or several means to adjust the φ phase difference angle, ρO radius and ρO' radius if need be.

5. A device according to any previous claim further comprising one or several couplage means with one or several devices providing kinetic energy to shaft (1) or recovering kinetic energy from shaft (1).

6. A device according to any previous claim further comprising on shaft (1) one or several means allowing one or several users to drive this shaft in rotation, like one or several handles on one or several cranks, one or several pedals on one or several cranks, one or several cables connecting one or several cranks to one or several handles via one or several return pulleys if need be.

7. A device according to any previous claim further comprising on shaft (1) a pair of pedals per user driving this shaft and, for each pedal, two rods, the first one being in length approximately like the user's leg, the first tip of the first rod being articulated, on pedal, in rotation following an axis parallel to Oy, the second tip of the first rod being articulated, on the first tip of the second rod, in rotation following an axis parallel to Oy, the second rod being in length approximately like the user's thigh, the second tip of the second rod being articulated in rotation following an axis parallel to Oy and near the user's hip, prehension means for user's hand, like handle, being fixed on one or the other rod, preferably near the articulation between first and second rods.

8. A device according to any previous claim further comprising one or several coupling means with one or several other devices according the invention.

9. A device according to any previous claim further comprising one or several further sets each one comprising an arm, an orientation part, a support of propelling element and coupling means in rotation between this orientation part and this support of propelling element, these additional parts being, in each additional set, organized as defined in the first claim for the main arm (4), the main orientation part (8) and the main support of propelling element (5), each additional arm having its rotation axis parallel to Oz possibly separate from this one of the main arm (4), and being drived in rotation by the translatory lever(s) (6, 19), each additional orientation part being drived in rotation by the orientation lever(s) (7, 24).

**Patentansprüche**

1. Vorrichtung, versehen mit einem direkten orthonormierten Fixpunkt Oxyz, bestimmt entweder, ausgehend von ihrem Rotationsantrieb durch einen oder mehrere Benutzer oder mittels eines Motorsystems für ein Endantriebselement, welches ein aerodynamisches oder hydrodynamisches Querruder oder ein Rad oder eine Schlittschuh- oder Schneeschuhkufe oder irgendeine Kombination aus den genannten Elementen sein kann, einem Wechselantrieb aus den beiden Komponenten Translation und Rotation zum Zwecke der Fortbewegung in unterschiedlichen Medien, sei es umgekehrt, ausgehend von einem Wechselantrieb mit den zwei Komponenten der Translation und Rotation eines Endantriebselementes gleichen Typs, um einen Energieerzeuger in Rotation zu versetzen, eine Vorrichtung bestehend aus einer Kurbelwelle (1) mit zwei Kurbeln, deren erste Kurbel (2), mit Radius ρT, Schiebekurbel genannt, und deren zweite Kurbel (3), mit Radius ρO, Schwenkkurbel genannt, einem Ansatzstück auf der Ebene Oxy, bezeichnet als Arm (4), drehbar im Markierungspunkt Oxyz, einem Bauteil bezeichnet als Auflage für Endantriebselement (5), drehbar auf dem Arm (4) und ausgestattet mit einem oder mehreren Verbindungsmitteln zu einem Endantriebselement, einem als Schiebehebel (6) bezeichneten Teil, drehbar im Markierungspunkt Oxyz, einem Schwenkhebel (7) genannten Teil, drehbar im Bereich Oxyz, einem Bauteil bezeichnet als Schwenksockel (8), drehbar im Markierungspunkt Oxyz, einer Pleuelstange, bezeichnet als Schiebepleuel (9), einer Pleuelstange, bezeichnet als Schwenkpleuel (10), ein oder mehrere Mittel der Drehkupplung zwischen dem Schiebehebel (6) und dem Arm (4), ein oder mehrere Mittel der Drehkupplung zwischen dem Schwenkhebel (7) und dem Schwenksockel (8), ein oder mehrere Mittel der Drehkupplung zwischen dem Schwenksockel (8) und der Auflage für Endantriebselement (5), wobei diese Bauteile folgendermaßen angeordnet und dimensioniert sind: Die Rotationsachse der Kurbelwelle (1) ist auf der Achse Oy angeordnet, die beiden Schiebe- (2) und Schwenkkurbeln (3) liegen in Bezug auf die Ebene Oxz auf den Koordinaten yMT bzw. yMO und sind zueinander phasenverschoben um einen Winkel Φ; der Arm (4) dreht sich auf einer Achse parallel zu Oz, wobei diese Rotationsachse die Ebene Oxy in einem Punkt B (11) der Koordinaten (xB, yB, 0) im Markierungspunkt Oxyz schneidet, wobei der Arm (4) mit einem direkten orthonormierten Fixpunkt $Bx_By_Bz_B$ versehen und $Bz_B$ als Oz ausgerichtet ist; die Auflage für Endantriebselement (5) dreht sich auf dem Arm (4) auf einer Achse parallel zur Achse $Bz_B$ und schneidet dabei $Bx_B$ an einem Punkt S (12) der Koordinaten ($x_B$S, 0, 0) im Markierungspunkt $Bx_By_Bz_B$; der Schwenksockel (8) dreht sich auf der Achse $Bz_B$; der Schiebehebel (6) dreht sich auf einer Achse parallel zu Oz, wobei diese Rotationsachse die Ebene Oxy in einem Punkt BT (13) der Koordinaten (xBT, yBT, 0) im Markierungspunkt Oxyz schneidet, wobei dieser Schiebehebel (6) mit einem direkten orthonormierten Fixpunkt $BTx_{BT}y_{BT}z_{BT}$ versehen und $BTz_{BT}$ als OZ, $BTx_{BT}$ als Ox ausgerichtet ist, wenn der Schiebehebel (6) in neutraler Rotationsposition steht, wobei die Halbamplitude der Rotation, gemessen auf der Achse Ox, notiert als αmaxBT, in der Regel positiv ist, wenn eine Verschiebung der Schiebekurbel (2) nach x positiv eine negative Drehbewegung des Schiebehebels (6) bewirkt, und negativ, wenn nicht; der Schwenkhebel (7) dreht sich auf einer Achse parallel zu Oz, diese Rotationsachse schneidet die Ebene Oxy in einem Punkt BO (14) der Koordinaten (xBO, yBO, 0) im Markierungspunkt Oxyz, wobei dieser Schwenkhebel (7) mit einem direkten orthonormierten Fixpunkt $BOx_{BO}y_{BO}z_{BO}$ versehen ist, wobei $BOz_{BO}$ als OZ und $BOx_{BO}$ als Ox ausgerichtet ist, wenn der Schwenkhebel (7) in neutraler Rotationsposition steht, wobei die Halbamplitude der Rotation, gemessen auf der Achse Ox, notiert als αmaxBO, in der Regel positiv ist, wenn eine Verschiebung der Schwenkkurbel (3) nach x positiv eine negative Drehbewegung des Schwenkhebels (7) bewirkt, und negativ, wenn nicht; der Schiebepleuel (9) mit einer Länge LBT verbindet die Schiebekurbel (2) mit dem Schiebehebel (6) in einem Punkt CT (15) der Koordinaten ($x_{BT}$CT, $y_{BT}$CT) im Markierungspunkt $BTx_{BT}y_{BT}$, wobei die Länge LBT und die Koordinaten ($x_{BT}$CT, $y_{BT}$CT) Lösungen des durch die folgenden drei Gleichungen gebildeten Systems sind:

$$\text{(Eq. A1)} \quad LBT = [(xL + x_{BT}CT * \cos(\alpha max) - y_{BT}CT * \sin(\alpha max) + \rho)^2 + (x_{BT}CT * \sin(\alpha max) + y_{BT}CT * \cos(\alpha max) - (yM - yL))^2]^{1/2}$$

$$\text{(Eq. B1)} \quad LBT = [(xL + x_{BT}CT * \cos(-\alpha max) - y_{BT}CT * \sin(-\alpha max) - \rho)^2 + (x_{BT}CT * \sin(-\alpha max) + y_{BT}CT * \cos(-\alpha max) - (yM - yL))^2]^{1/2}$$

$$\text{(Eq. C1)} \quad LBT = [(xL + x_{BT}CT)^2 + (y_{BT}CT - (yM - yL))^2 + \rho^2]^{1/2}$$

mit: ρ = ρT, yM = yMT, xL =xBT, yL = yBT, αmax = αmaxBT ;
Der Schwenkpleuel (10) mit einer Länge LBO verbindet die Schwenkkurbel (3) mit dem Schwenkhebel (7) in einem Punkt CO (16) der Koordinaten ($x_{BO}$CO, $y_{BO}$CO) im Markierungspunkt $BOx_{BO}y_{BO}$, wobei die Länge LBO und die Koordinaten ($x_{BO}$CO, $y_{BO}$CO) Lösungen des durch die folgenden drei Gleichungen gebildeten Systems sind :

$$(Eq.\ A2)\quad LBO = [(xL + x_{BO}CO * \cos(\alpha max) - y_{BO}CO * \sin(\alpha max) + \rho)^2$$
$$+ (x_{BO}CO * \sin(\alpha max) + y_{BO}CO * \cos(\alpha max) - (yM - yL))^2]^{1/2}$$

$$(Eq.\ B2)\quad LBO = [(xL + x_{BO}CO * \cos(-\alpha max) - y_{BO}CO * \sin(-\alpha max) - \rho)^2$$
$$+ (x_{BO}CO * \sin(-\alpha max) + y_{BO}CO * \cos(-\alpha max) - (yM - yL))^2]^{1/2}$$

$$(Eq.\ C2)\quad LBO = [(xL + x_{BO}CO)^2 + (y_{BO}CO - (yM - yL))^2 + \rho^2]^{1/2}$$

mit: $\rho = \rho O$, $yM = yMO$, $xL = xBO$, $yL = yBO$, $\alpha max = \alpha maxBO$.

2.   Vorrichtung nach der Forderung 1 **dadurch** charakterisiert, dass sie eine zweite Schiebekurbel (17) auf der Kurbelwelle (1), ein zweites Schiebepleuel (18), einen zweiten Schiebehebel (19), ein oder mehrere Drehkupplungselemente zwischen dem zweiten Schiebehebel (18) und dem Arm (4) umfasst, wobei diese Teile auf folgende Weise angeordnet und dimensioniert sind: Die zweite Schiebekurbel (17) ist im Winkel $\rho T'$ auf der Koordinate $yMT'$ angeordnet und um 180 Grad phasenverschoben gegenüber der ersten Schiebekurbel (2); der zweite Schiebehebel (19) ist drehbar auf einer Achse parallel zu Oz, dabei schneidet diese Rotationsachse die Ebene Oxy in einem Punkt BT' (20) der Koordinaten $(xBT', yBT', 0)$ im Markierungspunkt Oxyz, wobei dieser zweite Schiebehebel (19) mit einem direkten orthonormierten Fixpunkt $BT'x_{BT'}y_{BT'}z_{BT'}$ versehen ist, während $BTz_{BT}$ als OZ und $BT'x_{BT'}$ als Ox ausgerichtet sind, wenn der zweite Schiebehebel (19) in neutraler Rotationsposition steht, wobei die Halbamplitude der Rotation, gemessen auf der Achse Ox, ebenso in der Regel derjenigen des ersten Schiebehebels (6) gegenüber liegt, also $-\alpha maxBT$; der zweite Schiebepleuel (18) mit einer Länge von $LBT'$ verbindet die zweite Schiebekurbel (17) mit dem zweiten Schiebehebel (19) in einem Punkt CT' (21) der Koordinaten $(x_{BT'}CT', y_{BT'}CT')$ im Markierungspunkt $BT'x_{BT'}y_{BT'}$, wobei die Länge $LBT'$ und die Koordinaten $(x_{BT'}CT', y_{BT'}CT')$ Lösungen des durch die folgenden drei Gleichungen gebildeten Systems sind:

$$(Eq.\ A3)\quad LBT' = [(xL + x_{BT}CT' * \cos(\alpha max) - y_{BT}CT' * \sin(\alpha max) + \rho)^2$$
$$+ (x_{BT}CT' * \sin(\alpha max) + y_{BT}CT' * \cos(\alpha max) - (yM - yL))^2]^{1/2}$$

$$(Eq.\ B3)\quad LBT' = [(xL + x_{BT}CT' * \cos(-\alpha max) - y_{BT}CT' * \sin(-\alpha max) - \rho)^2$$
$$+ (x_{BT}CT' * \sin(-\alpha max) + y_{BT}CT' * \cos(-\alpha max) - (yM - yL))^2]^{1/2}$$

$$(Eq.\ C3)\quad LBT' = [(xL + x_{BT}CT')^2 + (y_{BT}CT' - (yM - yL)))^2 + \rho^2]^{1/2}$$

mit: $\rho = \rho T'$, $yM = yMT'$, $xL = xBT'$, $yL = yBT'$, $\alpha max = -\alpha maxBT$

3.   Vorrichtung nach der Forderung 1 oder der Forderung 2 **dadurch** charakterisiert, dass sie eine zweite Schwenkkurbel (22) auf der Kurbelwelle (1), ein zweites Schwenkpleuel (23), einen zweiten Schwenkhebel (24), ein oder mehrere Drehkupplungselemente zwischen dem zweiten Schwenkhebel (24) und dem Schwenksockel (8) umfasst, wobei diese Teile auf folgende Weise angeordnet und dimensioniert sind: Die zweite Schwenkkurbel (22) ist im Winkel $\rho O'$ auf der Koordinate $yMO'$ angeordnet und um 180 Grad phasenverschoben gegenüber der ersten Schwenkkurbel (3); der zweite Schwenkhebel (24) ist drehbar auf einer Achse parallel zu Oz, dabei schneidet diese Rotationsachse die Ebene Oxy in einem Punkt BO' (25) der Koordinaten $(xBO', yBO', 0)$ im Markierungspunkt Oxyz, wobei dieser zweite Schwenkhebel (24) mit einem direkten orthonormierten Fixpunkt $BO'x_{BO'}y_{BO'}z_{BO'}$ versehen ist, während $BTz_{BO'}$ als Oz und $BO'x_{BO'}$ als Ox ausgerichtet sind, wenn der zweite Schwenkhebel (24) in neutraler Rotationsposition steht, wobei die Halbamplitude der Rotation, gemessen auf der Achse Ox, in der Regel ebenso derjenigen des ersten Schwenkhebels (7) gegenüber liegt, also $-\alpha maxBO$; der zweite Schwenkpleuel (23) mit einer Länge von $LBO'$ verbindet die zweite Schwenkkurbel (22) mit dem zweiten Schwenkhebel (24) in einem Punkt CO' (26) der Koordinaten $(x_{BO'}CO', y_{BO'}CO')$ im Markierungspunkt $BO'x_{BO'}y_{BO'}$, wobei die Länge $LBO'$ und die Koordinaten

$(x_{BO'}CO', y_{BO'}CO')$ Lösungen des durch die folgenden drei Gleichungen gebildeten Systems sind:

$$(\text{Eq. A4}) \quad LBO' = [(xL + x_{BO'}CO' * \cos(\alpha max) - y_{BO'}CO' * \sin(\alpha max) + \rho)^2$$
$$+ (x_{BO'}CO' * \sin(\alpha max) + y_{BO'}CO' * \cos(\alpha max) - (yM - yL))^2]^{1/2}$$

$$(\text{Eq. B4}) \quad LBO' = [(xL + x_{BO'}CO' * \cos(-\alpha max) - y_{BO'}CO' * \sin(-\alpha max) - \rho)^2$$
$$+ (x_{BO'}CO' * \sin(-\alpha max) + y_{BO'}CO' * \cos(-\alpha max) - (yM - yL))^2]^{1/2}$$

$$(\text{Eq. C4}) \quad LBO' = [(xL + x_{BO'}CO')^2 + (y_{BO'}CO' - (yM - yL))^2 + \rho^2]^{1/2}$$

mit: $\rho = \rho O'$, $yM = yMO'$, $xL = xBO'$, $yL = yBO'$, $\alpha max = -\alpha maxBO$.

4.  Vorrichtung nach irgendeiner der vorherigen Forderungen **dadurch** charakterisiert, dass sie ein oder mehrere Mittel zur Einstellung des Phasenverschiebungswinkels $\Phi$, des Radius $\rho O$ und gegebenenfalls des Radius $\rho O'$ umfasst.

5.  Vorrichtung nach irgendeiner der vorherigen Forderungen **dadurch** charakterisiert, dass sie ein oder mehrere Mittel zur Kopplung mit einem oder mehreren Systemen der Energieübertragung auf die Kurbelwelle (1) oder Energieentnahme von der Kurbelwelle (1) umfasst.

6.  Vorrichtung nach irgendeiner der vorherigen Forderungen **dadurch** charakterisiert, dass sie auf der Kurbelwelle (1) eine oder mehrere Mittel aufweist, die es einem oder mehreren Benutzern erlauben, die genannte Welle in Rotation zu versetzen, wie etwa ein oder mehrere Griffe auf einer oder mehreren Kurbeln, ein oder mehrere Pedale auf einer oder mehreren Kurbeln, ein oder mehrere Kabel, die eine oder mehrere Kurbel mit einem oder mehreren Griffen mittels einer oder eventuell mehreren Vorgelegescheiben verbinden.

7.  Vorrichtung nach irgendeiner der vorherigen Forderungen **dadurch** charakterisiert, dass sie auf der Kurbelwelle (1) ein Paar Pedale pro Benutzer zum Antrieb der genannten Welle aufweist, sowie für jedes Pedal zwei Stangen, wobei die erste Stange genau so lang ist wie das Bein des Benutzers, das erste Ende der ersten Stange auf dem Pedal auf einer Achse parallel zu Oy drehbar ist und das zweite Ende der ersten Stange auf dem ersten Ende der zweiten Stange auf einer Achse parallel zu Oy drehbar ist und die zweite Stange genau so lang wie der Oberschenkel des Benutzers ist; dabei ist das zweite Ende der zweiten Stange auf einer Achse parallel zu Oy drehbar und nahe der Hüfte des Benutzers, während eine Greifvorrichtung für eine Hand des Benutzers wie etwa ein Griff, der auf der einen oder anderen Stange, vorzugsweise in der Nähe des Gelenks zwischen der ersten und zweiten Stange angebracht ist.

8.  Vorrichtung nach irgendeiner der vorherigen Forderungen **dadurch** charakterisiert, dass sie ein oder mehrere Mittel zur Kopplung mit einer oder mehreren anderen Vorrichtungen der Erfindung umfasst.

9.  Vorrichtung nach irgendeiner der vorherigen Forderungen **dadurch** charakterisiert, dass sie eine oder mehrere Zusatzeinrichtungen umfasst, wobei jede aus einem Arm, einem Schwenksockel, einer Auflage für Endantriebselement und Mitteln zur Drehkopplung zwischen diesem Schwenksockel und dieser Auflage für Endantriebselement umfasst, wobei diese Zusatzelemente in jeder Zusatzeinrichtung in derselben Weise untereinander angeordnet sind, wie dies in der ersten Forderung definiert ist für den Arm (4), den Schwenksockel (8) und die Auflage für Endantriebselement (5) in ihrer Ursprungsform, wobei jeder zusätzliche Arm eine Rotationsachse parallel zur Achse Oz aufweist, eventuell unterschiedlich zu derjenigen des Arms (4) in seiner Ursprungsform, und durch den oder die Schiebehebel (6, 19) in Rotation versetzt wird, wobei jeder zusätzliche Schwenksockel durch den oder die Schwenkhebel (7,24) in Rotation versetzt wird.

FIG. 1

FIG. 2

FIG. 3

34

37

38

**FIG. 4**

Z

44

5

42, 43

40

39

41  39  40

43

42

5

**FIG. 5**

**FIG. 6**